(19) Europäisches Patentamt
European Patent Office
Office européen des brevets

(11) EP 2 230 011 B1

(12) EUROPÄISCHE PATENTSCHRIFT

(45) Veröffentlichungstag und Bekanntmachung des Hinweises auf die Patenterteilung:
**25.03.2020 Patentblatt 2020/13**

(51) Int Cl.:
***B01J 19/32*** *(2006.01)*

(21) Anmeldenummer: **09158651.1**

(22) Anmeldetag: **23.04.2009**

(54) **Struckturierte Packung**

Structured packing

Emballage structuré

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **18.03.2009 EP 09155549**

(43) Veröffentlichungstag der Anmeldung:
**22.09.2010 Patentblatt 2010/38**

(73) Patentinhaber: **Sulzer Management AG**
**8401 Winterthur (CH)**

(72) Erfinder:
- **Ausner, Ilja**
**78337 Öhningen (DE)**
- **Duss, Markus**
**8405 Winterthur (CH)**

(74) Vertreter: **Henkel & Partner mbB**
**Patentanwaltskanzlei, Rechtsanwaltskanzlei**
**Maximiliansplatz 21**
**80333 München (DE)**

(56) Entgegenhaltungen:
**EP-A- 0 529 422**
**EP-A- 1 063 009**
**EP-A- 1 216 752**
**EP-A2- 1 166 868**
**GB-A- 2 258 524**
**US-A1- 2008 093 294**

EP 2 230 011 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft eine strukturierte Packung sowie eine Kolonne, welche eine derartige strukturierte Packung enthält, insbesondere eine Absorptionskolonne. Die Erfindung betrifft insbesondere eine strukturierte Packung, die den Druckverlust reduziert und sich insbesondere für Absorptionsanwendungen mit einem wässrigen Absorptionsmittel wie z.B. der $CO_2$-Absorption aus Rauchgas eignet.

In der Absorption findet das Prinzip der strukturierten Packungen schon seit Jahrzehnten Anwendung (vgl. K. Sattler "Thermische Trennverfahren", VCH Verlag, Weinheim 1995), da sich hiermit einzusetzende Energie sowie Bauhöhe der Absorptionskolonne einsparen lassen.

Strukturierte Packungen sind in einer handelsüblichen Ausführungsform als gefaltete, hintereinander angeordnete Bleche ausgeführt, deren Struktur geneigte und sich immer wieder kreuzende Kanäle aufweist. Diese Kanäle beeinflussen die Strömungen von Gas- und Flüssigphase innerhalb der Packung positiv und begünstigen den Stofftransport zwischen den Phasen. Das heisst, in den Kanälen der Packung werden Gas- und Flüssigphase in Kontakt gebracht und somit der Stofftransport zwischen den Phasen begünstigt.

Um die Trennleistung einer strukturierten Packung zu steigern, wird üblicherweise die Gesamtoberfläche der strukturierten Packung vergrössert, was zumeist durch eine höhere Anzahl an Packungslagen und/oder engere Kanalgeometrien erreicht wird.Die Gesamtoberfläche ergibt sich rechnerisch als Summe der geometrischen Oberflächen der Packungslagen. Diese Massnahmen führen allerdings zu einer Erhöhung des Druckabfalls in der strukturierten Packung. Daraus folgt aber, dass zur Verringerung des Druckabfalls weniger Gesamtoberfläche vorgesehen werden muss, wodurch sich die Trennleistung verschlechtert, also die Effizienz der Packung. Zudem können offenere Kreuzungskanäle vorgesehen werden. Offenere Kreuzungskanäle bedeutet, dass der Neigungswinkel der Kanäle bezogen auf die Hauptströmungsrichtung geringer gewählt wird. Das bedeutet, dass je nach Anwendungsfall ein Optimum zwischen Druckabfall und bestmöglicher Trennleistung gefunden werden muss.

Die sich kreuzenden Kanäle weisen jedoch viele Kontaktstellen auf, die sich in einigen Anwendungen positiv in anderen Anwendungen auch negativ auswirken können.

In Anwendungen mit gut benetzenden Flüssigkeitsströmen wie bei Rektifikationsprozessen mit organischen Fluiden bewirken die Kontaktstellen, dass ein auftreffender Flüssigkeitsstrom geteilt und zu den Seiten der Kanäle abgelenkt wird. Dadurch wird die Querverteilung der Flüssigkeit verstärkt und die Effizienz verbessert sich. Die Kontaktstellen bewirken zudem, dass die Gasströmung vornehmlich in Richtung der Kanäle verläuft und nicht parallel zur Hauptströmungsrichtung, wodurch der gasseitige Strofftransport verbessert werden kann.

Um die Kontaktstellen können sich Totzonen ausbilden, in denen die Flüssigkeit in geringerem Mass am Stoffaustausch beteiligt ist, als die restliche Flüssigkeit, die sich auf der strukturierten Packung befindet. Dieses Phänomen ist bereits bekannt aus US 6'378'332 B1, in welcher eine Packung für die kryogene Rektifikation beschrieben wird, die das Auftreten solcher Totzonen reduzieren soll. Die Lösung gemäss US 6'378'332 B1, liegt darin, die Anzahl der Kontaktstellen zwischen den Packungslagen durch abwechselnd hohe und flache Faltungen jeder einzelnen Packungslage zu reduzieren. Allerdings werden hierbei Systeme betrachtet, deren kleine Oberflächenspannung dennoch zu einer optimalen Benetzung der Gesamtoberfläche führen, d.h. die Zonen hinter den Kontaktstellen sind immer noch mit Flüssigkeit benetzt. Hieraus folgt, dass die effektiv zur Verfügung stehende Stoffaustauschfläche sich im Idealfall nur um die Kontaktfläche unterscheidet, die von den Kontaktstellen benötigt wird. Einzig die Kontaktstellen führen folglich zu einem Verlust an effektiv zur Verfügung stehender Stoffaustauschfläche. Die effektiv zur Verfügung stehende Stoffaustauschfläche ist der Teil der Gesamtoberfläche, welcher von dem schwerer flüchtigen Fluid, in den meisten Fällen einer Flüssigkeit, benetzt wird.

Aus der US 6'378'332 B1 ist somit ein Rektifikationsverfahren bekannt, in welchem eine strukturierte Packung verwendet wird, welche eine Kreuzkanalstruktur aufweist, das heisst aus gewellten oder gefalteten Blechen besteht, die kreuzweise übereinander gelegt sind. Benachbarte Bleche berühren sich längs der Wellenberge bzw. Kanten. Zwischen den gefalteten Blechen kann ein leichter flüchtiges Fluid im Gegenstrom zu einem schwerer flüchtigen Fluid strömen, wobei ein Stoffaustausch stattfinden kann. In der US 6'378'332 B1 wird ein Verfahren gezeigt, um die Anzahl der Kontaktstellen zwischen zwei benachbarten Blechen zu reduzieren. Hierzu wird vorgesehen, die Höhe der Wellenberge oder Kanten derart zu variieren, dass nur noch ein Teil der Wellenberge oder Kanten jedes Blechs die maximale Höhe aufweist. Die Bleche berühren einander somit nur entlang der Wellenberge oder Kanten mit maximaler Höhe.

In flüssigkeitskontrollierten Systemen wird der Stofftransport massgeblich durch die Stoffaustauschfläche beeinflusst. Dies gilt insbesondere, wenn chemische Reaktionen in der flüssigen Phase ablaufen. EP 0 671 963 B1 schlägt hierzu vor, die Packungslagen noch enger zusammenzuführen, um mehr Packungslagen pro Volumeneinheit unter zu bringen als normalerweise üblich. Nachteilig hierbei ist wiederum der höhere Materialverbrauch und der steigende Druckverlust.

Überraschenderweise hat sich nun gezeigt, dass Packungen mit weniger und anders angeordneten Kontaktstellen, die einerseits den Druckverlust gasseitig reduzieren und andererseits die Gesamtoberfläche verkleinern, einen positiven Einfluss auf die Absorptionsleistung bei flüssigkeitskontrollierten Systemen haben, insbesondere wenn chemische Reaktionen in der flüssigen Phase ablaufen.

Demzufolge wird eine solche Packungsstruktur vorzugsweise in flüssigkeitskontrollierten Systemen und mit Vorteil in Systemen zur Absorption von $CO_2$ aus Gasströmen angewendet. In diesem System wird der Stofftransport durch eine chemische Reaktion in der flüssigen Phase maßgeblich beeinflusst. Dieses $CO_2$ fällt in Abgasen an, die beispielsweise in Kraftwerken entstehen. Das $CO_2$ wird in einer nachgeschalteten Absorptionsanlage mittels Absorption vom Abgasstrom getrennt, verdichtet und anschließend beispielsweise unterirdisch gespeichert. Für die Absorption wird eine strukturierte Packung benötigt, die möglichst wenig Druckabfall erzeugt und zusätzlich eine hohe Trennleistung ermöglicht.

In der EP 1 063 009 A1 ist eine strukturierte Packung mit einer ersten und zweiten Packungslage beschrieben, die jeweils ein wellenartiges Profil mit Wellenbergen und Wellentälern aufweisen und als Kreuzkanalstruktur angeordnet sind. Die Wellenberge und Wellentäler umfassen jeweils Scheitel, die zumindest teilweise als Kante ausgebildet sind. Zwischen den zwei Packungslagen sind ebene und flächig ausgebildete Abstandselemente angeordnet.

Die EP 1 216 752 A2 beschreibt eine ähnliche strukturierte Packung.

In der EP 1 166 868 A2 ist ebenfalls ein ähnliche strukturierte Packung beschrieben.

Die US 2008/0093294 A1 beschreibt ebenfalls eine ähnliche strukturierte Packung mit Packungslagen, die als Kreuzkanalstruktur angeordnet sind. Auf einer flachen Oberseite von Wellenbergen der jeweiligen Packungslage sind noppenartige Abstandselemente angeordnet, die in jeweilige Vertiefungen einer darüber liegenden Packungslage eingreifen.

In der GB 2 258 524 A ist ähnliche strukturierte Packung beschrieben, bei welcher die Packungslagen jedoch nicht als Kreuzkanalstruktur angeordnet sind.

Eine Aufgabe der Erfindung besteht darin, eine strukturierte Packung bereitzustellen, die bei gleicher oder geringerer Anzahl der Kontaktpunkte eine verbesserte Stabilität aufweist.

Eine weitere Aufgabe der Erfindung besteht darin, die Anordnung der Kontaktpunkte derart zu wählen, dass es durch die Kontaktpunkte zu einer minimalen Veränderung des Stoffaustauschs kommt.

Eine weitere Aufgabe der Erfindung ist daher den Druckverlust innerhalb der Packung zu reduzieren, da hierdurch Energie, um die Gasströmung zu erzeugen, eingespart werden kann, wobei die Trennleistung so wenig wie möglich vom erreichbaren Optimum abweichen soll.

Erfindungsgemäß wird diese Aufgabe durch eine strukturierte Packung gemäß dem Patentanspruch 1 gelöst.

Die Lösung besteht in der Verwendung von Abstandselementen sowie einer Anordnung der Kontaktstellen, die eine maximale Flüssigkeitsbenetzung der Gesamtoberfläche insbesondere in Absorptionsanwendungen ermöglicht. Die Packungslage für eine strukturierte Packung weist ein wellenartiges Profil auf, wobei durch das wellenartige Profil eine Mehrzahl offener Kanäle ausgebildet ist. Die Kanäle umfassen ein erstes Wellental, einen ersten Wellenberg und einen zweiten Wellenberg, wobei der erste Wellenberg und der zweite Wellenberg das erste Wellental begrenzen, wobei der erste und der zweite Wellenberg einen ersten Scheitel und einen zweiten Scheitel aufweisen. Auf dem ersten Scheitel des ersten Wellenbergs ist ein sich in Richtung des ersten Scheitels erstreckendes Abstandselement ausgebildet, wobei das erste Wellental einen Talgrund aufweist, wobei das Abstandselement eine Kante aufweist, die einen grösseren Normalabstand vom Talgrund des Wellentals hat als der erste Scheitel des ersten Wellenbergs.

Zumindest ein Teil der Scheitel ist als Kante ausgebildet.

Ferner sind Abstandselemente erfindungsgemäß auf jeder der ersten und zweiten Packungslagen angeordnet. Die Abstandselemente der ersten Packungslage sind mit den Abstandselementen der zweiten Packungslage in berührendem Kontakt, wobei die zweite Packungslage ein wellenartiges Profil wie die erste Packungslage aufweist.

Nach einer bevorzugten Ausführungsform ist auf dem zweiten Scheitel ein zweites Abstandselement angeordnet. Alternativ oder in Ergänzung kann auf dem ersten Talgrund ein drittes Abstandselement angeordnet sein. Selbstverständlich kann auf der Packungslage eine Mehrzahl von ersten, zweiten oder dritten Abstandselementen vorgesehen sein.

Jede Packungslage kann eine erste Randbegrenzung, sowie eine zweite Randbegrenzung umfassen, wobei die erste Randbegrenzung im Wesentlichen parallel zur zweiten Randbegrenzung angeordnet ist. Insbesondere kann das Abstandselement in der Nähe der ersten Randbegrenzung und/oder in der Nähe der zweiten Randbegrenzung angeordnet sein.

Eine weitere Aufgabe der Erfindung ist daher eine strukturierte Packung bereitzustellen, die bei gleicher oder geringerer Anzahl der Kontaktpunkte eine verbesserte Stabilität aufweist. Zur Verbesserung der Stabilität weist die Packungslage ein wellenartiges Profil auf, wobei die Wellenhöhe im Wesentlichen konstant ist.

Nach einem bevorzugten Ausführungsbeispiel ist zumindest ein Teil der Wellentäler v-förmig ausgebildet.

Mithin umfasst eine strukturierte Packung gemäß der vorliegenden Erfindung eine erste Packungslage nach einem der vorhergehenden Ausführungsbeispiele und eine zweite Packungslage, wobei die zweite Packungslage ein wellenartiges Profil wie die erste Packungslage aufweist, wobei die erste Packungslage und die zweite Packungslage derart angeordnet sind, dass sich die Kanäle der ersten Packungslage mit den Kanälen der zweiten Packungslage kreuzen. Die erste Packungslage steht mit der zweiten Packungslage über die Abstandselemente in berührendem Kontakt.

Die Abstandselemente können bei vertikaler Ausrichtung der ersten und zweiten Packungslagen insbesondere untereinander angeordnet sein.

Die Abstandselemente können bei vertikaler Ausrichtung ersten und zweiten Packungslagen nebeneinander liegen.

Eine erfindungsgemässe Packung besteht aus strukturierten Packungslagen, deren Faltungen alle gleichmässig hoch sind. Hierdurch wird eine hohe Stabilität der Packung erzeugt, die besonders in Kolonnen mit grossem Durchmesser von besonderer Bedeutung ist. Die Anzahl der Kreuzungspunkte zwischen den einzelnen Packungslagen wird erfindungsgemäss durch das Einbringen von Abstandselementen zwischen den Packungslagen realisiert. Diese Abstandselemente können als Stege ausgebildet sein, die zum Beispiel aus Drähten oder schmalen Blechstreifen bestehen, die an bestimmen Stellen auf die gefalteten Packungslagen aufgebracht werden und somit die Packungslagen in einem definierten Abstand und an definierten Stellen voneinander trennen.

Noch vorteilhafter erscheint es, die Abstandselemente in die Packungslage zu integrieren und somit weniger Prozessschritte bei der Herstellung ausführen zu müssen. Hierzu können die Abstandselemente an definierten Stellen, z.B. an der Ober- und Unterkante der Packungslage, durch Tiefziehen aus dem Blech herausgearbeitet werden. Beim Übereinanderlegen der einzelnen Packungslagen berühren sich die Kanäle ausschliesslich an den Abstandselementen in einem Randbereich an der Ober- und Unterkante der Packungslage und bewirken so eine deutliche Reduktion der Kontaktstellen sowie eine Maximierung der benetzten Packungsoberfläche bei gleichzeitiger Stabilität der einzelnen Packungslagen und damit auch des Packungskörpers, der aus einer Mehrzahl von Packungslagen besteht.

Die strukturierte Packung nach einem der vorhergehenden Ausführungsbeispiele kann insbesondere für die Absorption mit einem wässrigen Absorptionsmittel Verwendung finden.

Die Vorrichtung zur Reinigung von Fluiden umfasst einen Stoffaustauschapparat, welcher ein leichter flüchtiges Fluid und ein schwerer flüchtiges Fluid enthält, welcher eine zuvor beschriebene strukturierte Packung enthält, wobei die strukturierte Packung eine zuvor beschriebene erste Packungslage und eine zuvor beschriebene zweite Packungslage enthält.,Durch das wellenartige Profil der Packungslagen werden offene Kanäle ausgebildet, wobei sich die Kanäle der ersten Packungslage mit den Kanälen der zweiten Packungslage kreuzen, wobei die Kanäle vom schwerer flüchtigen Fluid durchströmbar sind, sodass der Kanal durch das schwerer flüchtige Fluid als Film benetzbar ist, das leichter flüchtige Fluid sich innerhalb des Films befindet, wobei eine Reinigung entweder des leichter flüchtigen Fluids oder des schwerer flüchtigen Fluids durch einen Stoffaustausch zwischen dem leichter flüchtigen Fluid und dem schwerer flüchtigen Fluid durchführbar ist. Die erste Packungslage steht mit der zweiten Packungslage über Abstandselemente in berührendem Kontakt.

Die Abstandselemente sind bevorzugt als Stege ausgebildet. Werden nun derartige Abstandselemente vorgesehen, kann sich der Abstand von benachbarten Packungslagen vergrössern, insbesondere wenn die Stege sich auf Scheiteln befinden, welche die offenen Kanäle begrenzen. Unter Scheitel kann sowohl ein Wellenberg als auch eine Kante verstanden werden, also eine Spitze, die durch zwei benachbarte Seitenflächen eines Kanals ausgebildet ist. Wenn der Abstand zwischen den Packungslagen zunimmt, können in dem Stoffaustauschapparat weniger Packungslagen angeordnet werden, wenn das Gesamtvolumen, welches von der Packung eingenommen wird, nicht verändert werden soll. Hieraus folgt aber, dass die Gesamtoberfläche der Packung abnimmt.

Diese Aussage stimmt zwar für die Gesamtoberfläche. Allerdings hat sich gezeigt, dass diese Aussage für bestimmte Anwendungen nicht auf die Stoffaustauschfläche übertragen lässt. Für die Reinigung eines leichter flüchtigen Fluids, insbesondere eines Gases erfolgt der Stoffaustausch in mehreren sequentiell ablaufenden Teilschritten. Die im Gas enthaltenen Komponenten, die abgetrennt werden müssen, werden durch Diffusion an die Grenzfläche zur Flüssigkeit transportiert. Anschliessend müssen die Komponenten die Grenzfläche passieren und in der Flüssigkeit aufgenommen werden. Insbesondere kann in der Flüssigkeit auch eine chemische Reaktion ablaufen, sodass die Komponenten in der Flüssigkeit gebunden bleiben und mit der Flüssigkeit ausgetragen werden können. Wenn nun die Diffusionsgeschwindigkeit oder die Reaktionskinetik in der Flüssigkeit im Vergleich zu den vorhergehenden Teilschritten mehr Zeit in Anspruch nehmen, stellen diese Diffusionsgeschwindigkeit oder die Reaktionskinetik den limitierenden Faktor für den gesamten Stoffaustausch dar. Damit der Stoffaustausch verbessert werden kann, ist es erforderlich eine möglichst grosse Stoffaustauschfläche für die Flüssigkeit vorzusehen. Der durch die reduzierte Anzahl an Kreuzungspunkten verschlechterte gasseitige Stofftransport spielt für die erwähnten flüssigkeitskontrollierten Anwendungen keine entscheidende Rolle.

Eine weitere Aufgabe der Erfindung besteht darin, die Anordnung der Kontaktstellen derart zu wählen, dass es durch die Kontaktstellen zu einer minimalen ungünstigen Veränderung des Stoffaustauschs kommt.

Insbesondere sind in der Vorrichtung nach einem der vorhergehenden Ausführungsbeispiele die Abstandselemente im Randbereich der ersten Packungslage angeordnet. Im Gegensatz zum Stand der Technik, nach welchem eine immer noch gleichmässige Verteilung der Kontaktstellen angestrebt wird, die Anzahl der Kontaktstellen aber verringert wird, wird in der Erfindung auf diese gleichmässige Verteilung der Kontaktstellen über der Gesamtoberfläche gänzlich verzichtet. Werden somit die wenigen Kontaktstellen enger zusammen gelegt, bewirkt die Strömungsverengung eine Rückströmung hinter den Kontaktstellen, wodurch überraschenderweise die unbenetzte Fläche hinter der Kontaktstelle reduziert wird. Demzufolge ergeben sich wenige Kontaktstellen mit weniger unbenetzter Fläche und in der Summe ein maximales Verhältnis Stoffaustauschfläche zu Gesamtoberfläche.

Nach einem vorteilhaften Ausführungsbeispiel der Vorrichtung befinden sich die Abstandselemente auf jeder der Packungslagen. In diesem Fall sind alle Packungslagen gleich aufgebaut, was den Herstellungsaufwand reduziert. Die Packungslagen können in dieser Form kontinuierlich hergestellt werden, indem ein Band kontinuierlich gefaltet wird, währenddessen auch die Abstandselemente erzeugt werden. Das gefaltete und mit Abstandselementen versehene Band wird auf die gewünschten Abmessungen zugeschnitten. Die zugeschnittenen Bandteile ergeben die Packungslagen, wobei jede zweite Packungslage gekehrt wird, sodass eine kreuzweise Anordnung von Packungslagen entsteht, wenn sie benachbart zueinander aufeinander gelegt werden.

Vorteilhafterweise liegen die Abstandselemente bei vertikaler Ausrichtung der Packungslagen untereinander oder nebeneinander. Insbesondere bilden die Abstandselemente eine Reihe von Kontaktstellen aus, die entweder vertikal oder horizontal verläuft.

Eine weitere Aufgabe der Erfindung ist daher, eine strukturierte Packung bereitzustellen, die bei gleicher oder geringerer Anzahl der Kontaktstellen eine verbesserte Stabilität aufweist. Zur Verbesserung der Stabilität weist das wellenartige Profil eine konstante Wellenhöhe auf.

Besonders bevorzugt kommt die Vorrichtung in einer Absorptionskolonne oder Desorptionskolonne zum Einsatz.

Ein Verfahren zur Reinigung von Fluiden in einem Stoffaustauschapparat, welcher eine strukturierte Packung enthält, umfasst die Schritte: Zuführen eines schwerer flüchtigen Fluids zu dem Stoffaustauschapparat, Verteilen des zugeführten schwerer flüchtigen Fluids über der Gesamtoberfläche, Zuführen eines leichter flüchtigen Fluids in den Stoffaustauschapparat in einen Fluideintrittsbereich, Verteilen des leichter flüchtigen Fluids im Gaseintrittsbereich über die Gesamtoberfläche, wobei das leichter flüchtige Fluid im Gegenstrom zur Flüssigkeit strömt, Sammeln des leichter flüchtigen Fluids, welches die Packung verlässt in einem Fluidaustrittsbereich, wobei die strukturierte Packung eine erste Packungslage und eine zweite Packungslage enthält, wobei die erste Packungslage und die zweite Packungslage ein wellenartiges Profil mit konstanter Wellenhöhe aufweisen, wobei durch das wellenartige Profil offene Kanäle ausgebildet sind, wobei sich die Kanäle der ersten Packungslage mit den Kanälen der zweiten Packungslage kreuzen, wobei das leichter flüchtige Fluid durch die Kanäle vom Fluideintrittsbereich in Richtung des Fluidaustrittsbereichs strömt, wobei das schwerer flüchtige Fluid das durch die Kanäle strömende leichter flüchtige Fluid umgibt und entlang der Kanalwände strömt. Die erste Packungslage steht mit der zweiten Packungslage über Abstandselemente in berührendem Kontakt, sodass ein Stoffaustausch zwischen dem leichter flüchtigen Fluid und dem schwerer flüchtigen Fluid über die durch die Kanäle gebildete Stoffaustauschfläche erfolgt.

Die Reinigung erfolgt durch den Stoffaustausch, der von der Geschwindigkeit abhängt, mit welcher die aus dem Strom des leichter flüchtigen Fluids zu entfernenden Komponenten von dem schwerer flüchtigen Fluid aufgenommen werden, wenn das leichter flüchtige Fluid gereinigt werden soll oder der von der Geschwindigkeit abhängt, mit welcher die aus dem schwerer flüchtigen Fluid zu entfernenden Komponenten von dem schwerer flüchtigen Fluid abgegeben werden, wenn das schwerer flüchtige Fluid gereinigt werden soll, also ein Strippvorgang (stripping) erfolgt.

Insbesondere ist das leichter flüchtige Fluid ein Gas, beispielsweise kann das Verfahren zur Reinigung eines $CO_2$ haltigen Gases eingesetzt werden. Das schwerer flüchtige Fluid ist eine Flüssigkeit, in welcher eine chemische Reaktion ablaufen kann.

Durch Verwendung von Abstandselementen sowie einer Anordnung der Kontaktstellen wird eine maximale Flüssigkeitsbenetzung der Gesamtoberfläche in Stoffaustauschapparaten ermöglicht.

Vorzugsweise besteht die strukturierte Packung aus Packungslagen, deren Faltungen alle gleichmässig hoch sind. Hierdurch wird eine hohe Stabilität der Packung erzeugt, die besonders in Kolonnen mit grossem Durchmesser von besonderer Bedeutung ist. Die Anzahl der Kontaktstellen zwischen den einzelnen Packungslagen wird erfindungsgemäss durch das Einbringen von Abstandselementen zwischen den Packungslagen realisiert. Diese Abstandselemente können als Stege ausgebildet sein, die zum Beispiel aus Drähten oder schmalen Blechstreifen bestehen, die an bestimmen Stellen auf die gefalteten Packungslagen aufgebracht werden und somit die Packungslagen in einem definierten Abstand und an definierten Stellen voneinander trennen. Die Abstandselemente können durch Tiefziehen oder Prägen aus dem Material der Packungslage erzeugt werden oder dadurch, dass die Wellenberge und talartigen Senken zwischen den gewünschten Positionen der Abstandselemente so verformt werden, dass die Faltenhöhe geringer ist.

Die Abstandselemente werden an definierten Stellen, z.B. an der Ober- und Unterkante der Packungslage, angebracht. Beim Übereinanderlegen der einzelnen Packungslagen berühren sich die Kanäle ausschliesslich an den Abstandselementen in einem Randbereich an der Ober- und Unterkante der Packungslage und bewirken so eine deutliche Reduktion der Kontaktstellen sowie eine Maximierung der Stoffaustauschfläche bei gleichzeitiger Stabilität der einzelnen Packungslagen.

Nachfolgend wird die Erfindung anhand der Zeichnungen erläutert. Es zeigen:

Fig. 1 eine Ansicht einer erfindungsgemässen strukturierten Packung umfassend eine Mehrzahl von Packungslagen,

Fig. 2a eine Schnittdarstellung durch zwei benachbarte Packungslagen gemäss Fig. 1,

Fig. 2b eine Ansicht von zwei benachbarten Packungslagen mit gewelltem Profil,

Fig. 3 eine Darstellung einer konventionellen Packungslage unter Angabe des Strömungswegs des schwererflüchtigen Fluids,

Fig. 4 eine Darstellung der Knotenpunkte nach der Lösung gemäss US6378332,

Fig. 5 eine Darstellung der Knotenpunkte gemäss eines ersten Ausführungsbeispiels der Erfindung,

Fig. 6 eine Darstellung der Knotenpunkte gemäss eines weiteren Ausführungsbeispiels der Erfindung,

Fig. 7 eine Darstellung einer Variante der Anordnung der erfindungsgemässen Abstandselemente,

Fig. 8a eine Darstellung zu den Abmessungen der Abstandselemente,

Fig. 8b eine Darstellung von trigonometrischen Beziehungen zu dem Ausführungsbeispiel gemäss Fig. 8a,

Fig. 9a eine Veranschaulichung der Verformung der Packung nach dem Stand der Technik unter Querbelastung,

Fig. 9b eine Veranschaulichung der Verformung der erfindungsgemässen Packung unter Querbelastung,

Fig. 10 eine Darstellung einer Absorptionsanlage,

Fig. 11 Vergleich einer Packung mit und ohne Abstandselemente für eine Absorption mit flüssigseitig kontrolliertem Stofftransport.

Fig. 1 zeigt eine Vorrichtung 1 gemäss der Erfindung umfassend einige Packungslagen einer strukturierten Packung 7, welche einen Packungskörper ausbilden. Als strukturierte Packung 7 wird ein Mittel zum Stoffaustausch zwischen zwei fluiden Phasen verstanden. Die strukturierte Packung 7 wird in einem Stoffaustauschapparat 2 verwendet. Der Stoffaustauschapparat kann insbesondere als eine Kolonne 5 ausgeführt sein.

Die strukturierte Packung 7 besteht aus einer Mehrzahl von Packungslagen, die zueinander in einer sich regelmässig wiederholenden geometrischen Beziehung stehen. Als Beispiel für diese geometrische Beziehung kann der Abstand benachbarter Packungslagen gewählt werden. Gemäss der geometrischen Beziehung können die Abstände benachbarter Packungslagen voneinander periodisch den selben Wert annehmen, sodass aus der Summe der Packungslagen eine Struktur entsteht, die durch gleiche oder zumindest periodisch gleiche Abstände gekennzeichnet ist. Die Periodizität findet sich in der gesamten strukturierten Packung, wodurch die Packung eine regelmässige Struktur erhält. Insbesondere kann die Struktur als wellenartiges Profil ausgebildet sein.

Im Unterschied dazu bestehen Schüttfüllkörperpackungen aus Schüttfüllkörpern, das heisst aus Elementen von gleichem geometrischen Aufbau, wobei aber jeder Schüttfüllkörper zu benachbarten Schüttfüllkörpern beliebige Abstände aufweisen kann, somit eine Periodizität dieser Abstände nicht erkennbar ist. Die Schüttfüllkörper werden als Schüttung in die Kolonne eingebracht. Sie bilden ein Haufwerk auf einem Kolonnenboden aus. Das Haufwerk ist gekennzeichnet durch die zufällige Anordnung der einzelnen Schüttfüllkörper.

Die Packungslagen gemäss Fig. 1 bestehen aus dünnwandigen Elementen, die ein wellenartiges Profil aufweisen. Das wellenartige Profil ist gekennzeichnet durch eine sich periodisch wiederholende Folge von Erhebungen, also Wellenbergen und talartigen Senken, also Wellentälern. Dieses wellenartige Profil kann insbesondere als Faltung mit einem Zick-Zackprofil mit spitz zulaufenden Kanten ausgebildet sein. Die Packungslagen werden so zueinander angeordnet, dass die wellenartigen Profile von zwei benachbarten Packungslagen in einem Winkel zu der Hauptströmungsrichtung geneigt sind. Die wellenartigen Profile benachbarter Packungslagen sind zueinander kreuzweise angeordnet.

Fig. 2a zeigt zwei benachbarte Packungslagen 10, 100 der strukturierten Packung 7 gemäss Fig. 1. Eine erste Packungslage 10 ist benachbart zu einer zweiten Packungslage 100 angeordnet. Die erste Packungslage 10 und die zweite Packungslage 100 können insbesondere ein Element aus Blech oder Metallgewebe umfassen, alternativ dazu aber auch Elemente aus Kunststoff oder Keramik umfassen. Ein Element kann dabei die gesamte Packungslage umfassen, oder aber auch nur einen Teil derselben bilden. Das Element kann die Form einer Platte aufweisen, die ein wellenartiges Profil, insbesondere ein Zick-Zack-Profil oder ein wellenartiges Profil mit gerundeten Spitzen und Talgründen umfasst. Das Element kann Beschichtungen aus Kunststoffen oder Keramik aufweisen, um die Beständigkeit der Packungslage gegen chemische Einflüsse, wie beispielsweise Korrosion oder thermische Einflüsse, wie beispielsweise Temperatur, oder mechanische Einflüsse, wie beispielsweise Druck, beständiger zu machen.

Die erste Packungslage 10 und die zweite Packungslage 100 in der Fig. 2a sind in einer Ansicht dargestellt, welche einen Ausschnitt aus der ersten Oberfläche 8 der Packung 7 zeigt. Die erste Oberfläche 8 der Packung 7 ist im wesentlichen normal zur Hauptströmungsrichtung 6 angeordnet. Mit Hauptströmungsrichtung 6 wird die Strömungsrichtung bezeichnet, in welcher ein leichter flüchtiges Fluid, insbesondere ein Gas in der Kolonne 5 ohne Einbauten nach oben, also in Richtung des Kopfes der Kolonne 5, strömt. Alternativ dazu kann als Hauptströmungsrichtung auch die entgegengesetzte Richtung definiert werden. In diesem Fall entspricht die Hauptströmungsrichtung der Richtung, in die ein schwerer flüchtiges Fluid, das heisst zumeist eine Flüssigkeit, die Kolonne 5 ohne Einbauten, also im freien Fall, durchströmt. In der Packung weicht die Strömungsrichtung lokal von der Hauptströmungsrichtung ab, da die Strömung durch die Packungslagen der Packung umgelenkt wird.

Die erste Packungslage 10 der strukturierten Packung 7 weist ein wellenartiges Profil auf, wobei durch das wellenartige Profil eine Mehrzahl offener Kanäle 12, 14, 16 ausgebildet ist. Die Kanäle umfassen ein erstes Wellental 22, einen ersten Wellenberg 32 und einen zweiten Wellenberg 42. Der erste Wellenberg 32 und der zweite Wellenberg 42 begrenzen das erste Wellental 22. Der erste Wellenberg 32 und der zweite Wellenberg 42 weisen einen ersten Scheitel 33 und einen zweiten Scheitel 43 auf. Auf dem zweiten Scheitel 43 des zweiten Wellenbergs 42 ist ein sich in Richtung des zweiten Scheitels 43 erstreckendes Abstandselement 44 ausgebildet, welches als Steg ausgebildet ist. Das erste Wellental 22 weist einen Talgrund 23 auf. Das Abstandselement 44 weist eine Kante 45 auf, die einen grösseren Normalabstand 27 vom Talgrund 23 des Wellentals 22 hat als der zweite Scheitel 43 des zweiten Wellenbergs 42 vom Talgrund 23 des Wellentals 22. Dasselbe gilt für die Kante 35 des Abstandselements 34.

Der Normalabstand zwischen dem ersten Scheitel 33 des ersten Wellenbergs 32 und dem Talgrund 23 des ersten Wellentals 22 wird als Wellenhöhe 28 bezeichnet. Die Wellenhöhe 28 ist demnach kleiner als der Normalabstand 27. In einer Packungslage gemäss dieser Erfindung ist die Wellenhöhe 28 insbesondere im wesentlichen konstant, das heisst, sie liegt im Bereich der üblichen Toleranzen, die im Bereich von 0.5 mm liegen.

Auch auf dem ersten Scheitel 33 kann ein Steg 34 angeordnet sein. Wahlweise kann auch auf dem ersten Talgrund 23 ein Steg 24 angeordnet sein.

Die zweite Packungslage 100 der strukturierten Packung 7 weist ein wellenartiges Profil auf, wobei durch das wellenartige Profil eine Mehrzahl offener Kanäle 112, 114, 116 ausgebildet ist. Die Kanäle umfassen ein erstes Wellental 122, einen ersten Wellenberg 132 und einen zweiten Wellenberg 142. Der erste Wellenberg 132 und der zweite Wellenberg 142 begrenzen das erste Wellental 122. Der erste Wellenberg 132 und der zweite Wellenberg 142 weisen einen ersten Scheitel 133 und einen zweiten Scheitel 143 auf. Auf dem ersten Scheitel 133 des ersten Wellenbergs 132 ist ein sich in Richtung des ersten Scheitels 133 erstreckender Steg 134 ausgebildet. Auf dem zweiten Scheitel 143 des zweiten Wellenbergs 142 ist ein sich in Richtung des zweiten Scheitels 143 erstreckender Steg 144 ausgebildet. Das erste Wellental 122 weist einen Talgrund 123 auf. Der Steg 134 weist eine Kante 135 auf und der Steg 144 weist eine Kante 145 auf, die einen grösseren Normalabstand vom Talgrund 123 des Wellentals 122 hat als der zweite Scheitel 143 des zweiten Wellenbergs 142 vom Talgrund 123 des Wellentals 122. Zumindest ein Teil der Scheitel kann als Kante ausgebildet sein. Zumindest ein Teil der Wellentäler kann v-förmig ausgebildet sein. Der Normalabstand zwischen Talgrund und Scheitel ist gemäss Fig. 2a für alle Wellenberge der Packungslage im wesentlichen gleich.

Fig. 2b zeigt zwei benachbarte Packungslagen einer strukturierten Packung mit wellenartigem Profil, nach welchem die Scheitel keine spitzen Kanten ausbilden, sondern als Rundungen ausgeführt sind. Ansonsten wird auf die Beschreibung der Fig. 2a verwiesen.

Fig. 3 zeigt den Einfluss der Anordnungen der Kontaktstellen auf die Stoffaustauschfläche, beispielsweise der Packungslage 10 der in Fig. 2a oder Fig. 2b dargestellten Packung. Fig. 3a zeigt dabei eine Anordnung gemäss des Standes der Technik. Die Packungslage 10 überdeckt die nicht sichtbare, weil in der Zeichenebene dahinter liegende Packungslage 100. Von der Packungslage 10 sind beispielhaft der erste Scheitel 33, der zweite Scheitel 43 sowie der dazwischen liegende Talgrund 23 gezeigt. Die ersten und zweiten Scheitel 33, 43, sowie der Talgrund 23 bilden Faltkanten aus. Die Scheitel 33, 43 liegen auf dem Talgrund 123 auf, der zur Packungslage 100 gehört. Selbstverständlich enthalten jede der Packungslagen 10 und der Packungslagen 100 jeweils eine Mehrzahl von weiteren Scheiteln und Talgründen, die nicht näher bezeichnet sind, da sie sich von den bezeichneten Scheiteln und Talgründen nicht unterscheiden. In der Fig. 3 sind die zu den Scheiteln der Wellenberge gehörigen Linien dicker ausgezogen, als die zu den Talgründen gehörigen Linien. Des weiteren ist eine langgestrichelte Linie für die Scheitel der Wellenberge der zweiten Packungslage 100 vorgesehen, sowie eine kurzgestrichelte Linie für die Talgründe der Packungslage 100. An den Punkten, wo sich ein Talgrund der Packungslage 10 und ein Scheitel der Packungslage 100 treffen, entstehen Kontaktstellen 48, die in Fig. 3 mit einem Kreis markiert sind. Die Kontaktstellen 48 sind bei den gezeigten beiden Packungslagen 10, 100 über die Gesamtoberfläche gleichmässig verteilt.

Aus Fig. 3 ist ersichtlich, dass die Kontaktstellen sehr dicht beieinander liegen, wodurch sich sehr viele kleine, von dem schwerer flüchtigen Fluid nicht benetzte Zonen 46 und damit ein relativ kleiner Anteil an Stoffaustauschfläche zur Gesamtoberfläche ergeben. In Fig. 3 ist nur eine einzige Zone 46 gezeigt, die Pfeile 47 symbolisieren die Strömung des schwerer flüchtigen Fluids.

Fig. 4 zeigt den Fall, in welchem die Kontaktstellen beispielsweise durch eine Faltung der Packungslagen, wie sie in US 6'378'332 B1 vorgeschlagen wird, reduziert sind. Es ergeben sich zwar insgesamt deutlich weniger, dafür aber auch grössere unbenetzte Zonen 46 aufgrund der mittels Pfeilen 47 symbolisierten Strömung des schwerer flüchtigen Fluids.. In der Summe ergibt sich wiederum ein kleiner Anteil Stoffaustauschfläche an der Gesamtoberfläche Auf die geometrische Form der Packungslagen gemäss Fig. 4 wird im Detail noch in Fig. 9 eingegangen.

Fig. 5 zeigt eine Anordnung der Kontaktstellen 48 zwischen zwei benachbarten Packungslagen 10, 100 gemäss der Erfindung. Die Packungslage 100 ist hinter der Packungslage 10 angeordnet. Bezüglich der Darstellung wird auf Fig. 3 verwiesen. Die Anzahl der Kontaktstellen ist bezüglich der Oberfläche der Packungslage 10 verringert. Insbesondere sind die Kontaktstellen nicht gleichmässig über die Gesamtoberfläche verteilt.

Die Packungslage 10 umfasst eine erste Randbegrenzung 50, sowie eine zweite Randbegrenzung 60, wobei die erste Randbegrenzung 50 im wesentlichen parallel zur zweiten Randbegrenzung 60 angeordnet ist. Bei vertikaler Ausrichtung der Packungslage spannt die Randbegrenzung 50 eine obere Grenzfläche auf und die zweite Randbegrenzung 60 eine untere Grenzfläche auf. Des weiteren umfasst die Packungslage 10 eine erste Randbegrenzung 51 und eine zweite Randbegrenzung 61. Die erste Randbegrenzung 51 und die zweite Randbegrenzung 61 verlaufen bei vertikaler Ausrichtung der Packungslage in einer Packung benachbart der Innenwand des Stoffaustauschapparats, insbesondere der Kolonne, oder entlang einer Segmentgrenze, woran bei grossen Stoffaustauschapparaten ein weiteres Packungssegment angrenzt. In Stoffaustauschapparaten mit grossem Durchmesser, beispielsweise von 1 m und darüber hat es sich zur Vereinfachung von Fertigung und Montage bewährt, die Packung in Packungssegmente zu unterteilen. Ein Packungssegment erstreckt sich nur über einen Teil der Querschnittsfläche des Stoffaustauschapparats. Mehrere dieser Packungssegmente sind nebeneinander angeordnet, sodass die Summe der Packungssegmente die gesamte Querschnittsfläche des Stoffaustauschapparats erfasst. Die Kontaktstellen 48 sind in der Nähe der ersten und/oder zweiten Randbegrenzung 50, 51, 60, 61 angeordnet. Die Kontaktstellen weisen bevorzugt Abstandselemente auf. Diese Abstandselemente können als Ausbuchtung oder als Steg ausgebildet sein. Eine Mehrzahl von Abstandselementen, welche den gleichen Aufbau wie eines der Abstandselemente 34, 44 gemäss Fig. 2a oder Fig. 2b haben können, ist in der Nähe der ersten Randbegrenzung 50, 51 angeordnet.

Alternativ oder in Ergänzung kann eine Mehrzahl von Abstandselementen 24 in der Nähe der zweiten Randbegrenzung 60, 61 angeordnet sein. Selbstverständlich können sich Abstandselemente auch in der Nähe zumindest je einer der ersten und zweiten Randbegrenzungen befinden.

In Fig. 6 ist zudem eine weitere Variante dargestellt, bei der die Kontaktstellen nicht nebeneinander, sondern übereinander angeordnet sind. Auch hier bewirkt eine Flüssigkeitsströmung entlang der Kontaktstellen herunter eine Minimierung der unbenetzten Fläche zwischen den Kontaktstellen.

Die horizontale Anordnung der Kontaktstellen gemäss Fig. 5 hat den Vorteil, dass die unbenetzten Zonen hinter den unteren, randnahen Kontaktstellen sich nicht ausbilden können, weil sich die Flüssigkeit an der Grenze zwischen zwei übereinander stehenden Packungen aufstaut. Grundsätzlich ist es vorteilhaft, Kontaktstellen in der Nähe der Randbegrenzung 50, 60, 51, 61 anzusiedeln, weil hier die Benetzung schon wegen anderen Störeinflüssen ungünstig ist. Platziert man hingegen die Kontaktstellen im Inneren der Packungslage, wird dadurch ein weiterer Anteil der Gesamtoberfläche schlecht benetzt, der sonst ungestört bliebe.

Eine Ansicht einer Packungslage 10 gemäss der Erfindung ist in Fig. 7 dargestellt. Des weiteren ist die Packungslage 10 in Fig. 7 in der Projektion dargestellt. Die zugehörige strukturierte Packung 1 umfasst die erste Packungslage 10 und eine zweite Packungslage 100, wobei die die zweite Packungslage 100 bevorzugt ein wellenartiges Profil wie die erste Packungslage 10 aufweist. Die erste Packungslage 10 und die zweite Packungslage 100 sind derart angeordnet, dass sich die Kanäle der ersten Packungslage 10 mit den Kanälen der zweiten Packungslage 100 kreuzen. Die erste Packungslage 10 steht mit der zweiten Packungslage 100 über zumindest einen Steg 24, 44 in berührendem Kontakt. Die Stege sind auf jeder der ersten und zweiten Packungslage 10, 100 angeordnet. Bevorzugt sind die Stege wie in Fig. 5 oder Fig. 6 angeordnet. Die zweite Packungslage 100 ist in Fig. 7 der Einfachheit halber nicht zeichnerisch dargestellt. Die Stege der ersten Packungslage 10 sind mit den Stegen der zweiten Packungslage 100 in berührendem Kontakt. Bevorzugt sind die Stege 44, die in der Nähe der ersten Randbegrenzung 50 liegen, derart angeordnet, dass sie als Erhebungen auf einer ersten Seite 11 der Packungslage 10 ausgebildet sind. Die Stege 24, die in der Nähe der zweiten Randbegrenzung 60 angeordnet sind, sind als Erhebungen auf einer zweiten Seite 13 der Packungslage 10 ausgebildet. Die erste Seite 11 der Packungslage 10 ist der zweiten Seite 13 gegenüberliegend angeordnet und bildet je eine Oberfläche der Packungslage.

Insbesondere können die Stege bei vertikaler Ausrichtung der ersten und zweiten Packungslagen 10, 100 untereinander angeordnet ein. Alternativ dazu oder in Kombination können die Stege bei vertikaler Ausrichtung der ersten und zweiten Packungslagen nebeneinander angeordnet sein.

Entlang eines Scheitels der Packungslagen 10, 100 können auch andere Abstandselemente angeordnet sein, die nicht oder nicht ausschliesslich als Steg ausgebildet sein müssen. Ein derartiges Abstandselement kann von einer beliebigen Erhebung ausgebildet werden, die über die normale Faltungshöhe herausragt. Unter Faltungshöhe wird der Abstand zwischen einem Wellenberg und einem benachbarten Wellental verstanden. Wenn der Wellenberg an seinem Scheitel eine endliche Krümmung aufweist, ist der Abstand als der Normalabstand der beiden, parallel zueinander liegenden Scheitelpunktstangenten definiert. Wenn die Krümmung unendlich ist, das heisst der Scheitel spitz ist und somit der höchste Punkt keine eindeutig bestimmte Tangente aufweist, wird durch den höchsten Punkt eine Ebene gelegt, die alle Scheitelpunkte einer Seite der Packungslage enthält. Durch den tiefsten Punkt eines Wellentals wird ebenfalls eine Ebene gelegt, die alle Punkte des Wellentals sowie weiterer Wellentäler enthält. Die beiden Ebenen sollten zueinander parallel liegen. Daraus folgt, dass die Faltungshöhe der Normalabstand zwischen den beiden Ebenen ist. Derartige Abstandselemente erstrecken sich über einen Teil des Scheitels oder der Kante. Die Abstandselemente können durch Tiefziehen aus dem Rohling für die Packungslage, beispielsweise einem Packungsblech hergestellt werden oder durch Aufsetzen eines strangförmigen Elements, z.B. eines Drahtelements oder eines Stangenelements entlang der oberen Kante gebildet werden. Mit Vorteil werden die Abstandselemente einseitig auf den Scheiteln der Wellenberge oder der Täler der Faltungen angebracht. Vorzugsweise werden die Abstandselemente entlang des entgegen gesetzten bzw. gleichen Randbereichs 50, 60 aufgebracht.

Der Vorteil dieser Anordnung besteht darin, dass ein Rohling endlos lang hergestellt werden kann. Ein derartiger Rohling kann aus Bandmaterial bestehen, beispielsweise als plattenförmiges Blech ausgebildet sein. Aus dem Bandmaterial werden anschliessend Abschnitte bestimmter Länge zugeschnitten. Diese Abschnitte werden beispielsweise durch ein Biegeverfahren in ein wellenartiges Profil umgewandelt. Alternativ dazu kommt Bandmaterial zum Einsatz, welches bereits ein wellenartiges Profil aufweist. Der zugeschnittene Abschnitt mit dem wellenartigen Profil bildet dann die Packungslage aus. Diesem wellenartigen Profil kann während des Biegevorgangs ein Tiefziehvorgang überlagert werden, sodass während des Biegevorgangs die Abstandselemente durch Tiefziehen hergestellt werden. Alternativ ist ein Fertigungsverfahren möglich, bei dem die Bereiche zwischen den Stegen anders gebogen oder leicht tiefgedrückt werden, so dass sie eine andere Höhe aufweisen als die Stege. Eine erste Packungslage 10 und eine zweite Packungslage 100 werden wiederum durch Kehren jedes zweiten wellenartigen Profils passend übereinander gelegt. Zwischen allen Packungslagen befindet sich je eine Reihe Abstandselemente in der Nähe der oberen und unteren Randbegrenzung und/oder in der Nähe der seitlichen Randbegrenzungen.

Fig. 8 veranschaulicht die Bestimmung der Länge eines tiefgezogenen Abstandselements auf einem Scheitel 33, 43 des wellenförmigen Profils der ersten Packungslage 10. Die Scheitel 33, 43 sind in einem Winkel Φ (phi) zur Hauptströmungsrichtung 6 geneigt angeordnet und weisen einen Abstand $b_0$ vom ersten Scheitel 33 zum zweiten Scheitel 43 auf. Der Abstand $b_0$ kann hierbei insbesondere konstant sein. Des weiteren findet sich der Abstand $b_0$ zwischen erstem Talgrund 23 und zweitem Talgrund 26. In Fig. 8 fallen der erste Talgrund 23 mit dem ersten Wellental 22 und der zweite Talgrund 26 mit dem zweiten Wellental 25 zusammen. Die Länge eines Abstandselements 24, 34, 44 ist in Fig. 8 mit "a" bezeichnet. Die Länge "a" ist die Längserstreckung des Abstandselements in Richtung des zugehörigen Scheitels. Die Länge "a" ist bevorzugt derart gewählt, dass jeder Scheitel der ersten Packungslage 10 mit einem Scheitel der benachbarten zweiten Packungslage 100 genau dort einen Kreuzungspunkt aufweist, wo sich ein Abstandselement befindet. Das Abstandselement der Packungslage 10 steht in berührendem Kontakt mit einem Berührungspunkt des Scheitels der zweiten Packungslage 100. Der Berührungspunkt kann, aber muss nicht Teil eines Abstandselements der zweiten Packungslage 100 sein.

$$a = b_0 / \sin(2\Phi)$$

Diese Beziehung wurde unter der Annahme erhalten, dass der Neigungswinkel phi (Φ) der ersten Packungslage betragsmässig gleich ist wie der Neigungswinkel der zweiten Packungslage.

Dieser Annahme liegt die Fig. 8 zugrunde. Die Länge des Abstandselements a muss gerade so gross sein, dass sie genau ein Abstandselement der zweiten Packungslage bzw. deren Wellenberg schneidet. Wenn also der Schnittpunkt A gerade am Endpunkt des ersten Abstandselements liegt, dann liegt der Schnittpunkt B gerade ein wenig ausserhalb der Länge a des zweiten Abstandselements. Da dieser infinitesimale Unterschied zeichnerisch nicht darstellbar ist, wurden in Fig. 8b zwei Schnittpunkte für den ersten Wellenberg der zweiten Packungslage eingezeichnet.

Wird die zweite Packungslage horizontal nach links bezogen auf die Position der Packungslagen in Fig. 8b verschoben, wandert der Schnittpunkt A entlang der Länge des Abstandselements a bis zu dem Punkt A gegenüberliegenden Ende des Abstandselements.

In dem dargestellten Fall liegt die zweite Packungslage gerade so, dass der Grenzfall eintritt, in welchem im Punkt A ein Schnittpunkt mit dem Abstandselement, im Punkt B gerade kein Schnittpunkt mit dem Abstandselement vorhanden ist. Da die Neigungswinkel der beiden benachbarten Packungslagen 10, 100 betragsmässig gleich sind, entspricht der Abstand AB entlang des Scheitels des Wellenbergs der zweiten Packungslage ebenfalls der Länge des Abstandselements a.

Demzufolge ist das Dreieck ABC mit den Seitenlängen, x, a, a gleichschenklig. Des weiteren ergibt sich, dass der zwischen den beiden Seiten a aufgespannte Winkel gerade 2 Φ beträgt. Ebenfalls eingezeichnet ist $b_0$, die Wellenlänge, also der Normalabstand zwischen zwei benachbarten Scheiteln von Wellenbergen der ersten Packungslage. Dieses Dreieck muss einen rechten Winkel aufweisen sowie den Winkel 2 Φ an der Kante B ei nschl iessen.

Somit ergibt sich die gewünschte Beziehung für a unter Verwendung des Neigungswinkels Φ und der Wellenlänge $b_0$.

$$a = b_0 / \sin(2\Phi)$$

Bevorzugt liegt die Höhe der Abstandselemente im Bereich von 10 bis 30% der Lagenhöhe, sodass sich Spalten zwischen den einzelnen Packungslagen von eben diesem Wertebereich ergeben. Die Spalten betragen mimimal 1.5 mm für wässrige Systeme. Schmälere Spalten können nachteilig sein, da sich Flüssigkeit, insbesondere Wasser zwischen zwei benachbarten Kanten festsetzen kann, dort verbleiben kann und eine Flüssigkeitsbrücke ausbilden kann.

In Fig. 9a ist eine Packungslage nach bekannter Bauform mit unterschiedlich hohen Faltungen zur Reduzierung der Kontaktstellen dargestellt. Der Nachteil dieser Bauform besteht darin, dass bei Belastungen auf die Ober- und Unterseite, wobei die Pfeile 20, 21 die Richtung der Kraft angeben, die Packungslage zusammengestaucht wird. Die Faltungen umfassen einen ersten Scheitel 65 sowie einen zweiten Scheitel 85 sowie ein dazwischen liegendes Wellental 75. Die ersten und zweiten Scheitel 65, 85 können mit einer nicht dargestellten benachbarten Packungslage in Kontakt sein. Zwischen dem ersten Scheitel 65 und dem Talgrund 75 liegen ein Zwischenwellental 66 und ein Zwischenwellenberg 67, die eine Faltung ausbilden. Das Zwischenwellental 66 hat einen Zwischentalgrund 68 und der Zwischenwellenberg 67 hat einen Zwischenscheitel 69. Der Normalabstand 70 zwischen dem Zwischentalgrund 68 und dem Zwischenscheitel 69 ist kleiner als der Normalabstand 71 zwischen dem Scheitel 65 und dem Talgrund 75. Der Normalabstand 70 ist in dem in Fig. 9a gezeigten Ausführungsbeispiel ungefähr halb so gross wie der Normalabstand 71. Durch das Zwischenwellental 66 und den Zwischenwellenberg 67 wird somit eine halbhohe Faltung ausgebildet. Die halbhohe Faltung dient als Knautschzone und kann verformt werden. Durch diese Verformung kann zum einen kein stabiler Packungskörper gebaut werden, zum anderen ist das Einhalten einer festgelegten Lagenhöhe der Packung nicht möglich. Die Lagenhöhe entspricht dem vorhin definierten Normalabstand 71.

Durch eine erfindungsgemässe Bauform kann dieses Problem umgangen werden. Wie Fig. 9b zeigt, lässt sich eine Packungslage mit Abstandselementen auf jeder Faltung viel weniger stauchen und die Packungslage kann somit höheren Belastungen auf Ober- und Unterseite ausgesetzt werden. Dies ermöglicht den Aufbau stabiler Packungskörper und gewährleistet eine im wesentlichen konstante Lagenhöhe.

Fig. 10 zeigt eine Absorptionsanlage 90. Die Absorptionsanlage 90 umfasst zwei Stoffaustauschapparate, einen Absorber 91 und einen Desorber 92, welche insbesondere als Kolonnen ausgeführt sind. In der Absorptionsanlage werden im Absorber 91 eine oder mehrere Komponenten aus einem Gasstrom getrennt. Hierzu wird ein flüssiges Lösungsmittel oder Absorptionsmittel eingesetzt. Im Desorber 92 wird das Lösungsmittel oder Absorptionsmittel von den aufgenommenen Komponenten gereinigt.

Sowohl Absorption als auch Rektifikation sind Trennverfahren, um aus einem vorliegenden Einsatzstrom 93 eine oder mehrere Komponenten heraus zu trennen. Die Rektifikation wird angewandt, um Flüssigkeitsgemische aufgrund unterschiedlicher Siedetemperaturen der einzelnen Komponenten zu trennen wobei unter Rektifikation eine kontinuierliche Destillation zu verstehen ist, die insbesondere mehrere Trennstufen umfasst. Bei der Absorption hingegen werden eine oder mehrere Komponenten aus einem Gasstrom mit Hilfe eines geeigneten Lösungs- oder Absorptionsmittels 94 absorbiert und somit vom Gasstrom getrennt. Das Kopfprodukt des Absorbers 91 ist somit ein gereinigter Gasstrom 95. Das Sumpfprodukt 96 des Absorbers 91 ist ein mit der oder den Komponenten beladenes Absorptionsmittel oder Lösungsmittel. Aus ökonomischen, energetischen oder ökologischen Gründen kann es sinnvoll sein, das Absorptionsmittel oder Lösungsmittel zu reinigen und wieder als gereinigtes Lösungsmittel oder Absorptionsmittel 94 dem Absorber erneut zuzuführen. Die Reinigung des Absorptionsmittels oder Lösungsmittels erfolgt in dem Desorber 92. Das beladene Absorptionsmittel oder Lösungsmittel, also das Sumpfprodukt 96 des Absorbers bildet den Einsatzstrom des Desorbers. Dieser Einsatzstrom wird gemäss Fig. 10 als Flüssigkeit in den Desorber aufgegeben. Der Desorber 92 kann eine oder mehrere Packungen gemäss eines der vorhergehenden Ausführungsbeispiele enthalten. Das beladene Lösungsmittel oder Absorptionsmittel fliesst in Richtung des Sumpfes 95 des Desorbers. Im Sumpf wird das Absorptionsmittel oder Lösungsmittel zumindest teilweise verdampft, wozu ein Sumpfverdampfer 98 vorgesehen ist. Das im Sumpfverdampfer verdampfte Absorptionsmittel oder Lösungsmittel enthält die abzutrennenden Komponenten und nimmt während des Aufsteigens in der Kolonne die abzutrennenden Komponenten aus dem in Richtung des Sumpfes fliessenden Einsatzstroms des beladenen Absorptionsmittels oder Lösungsmittels auf. Somit entsteht im Desorber ein gasförmiger Teilstrom 99, welcher mit den abzutrennenden Komponenten angereichert ist. Diese abzutrennenden Komponenten können entweder thermisch, das heisst durch Kondensation oder über andere nachgeschaltete Trennschritte von dem gasförmigen Teilstrom 99 abgetrennt werden.

Alternativ oder in Ergänzung dazu können Entspannungsvorrichtungen vorgesehen sein, wenn der Desorber bei niedrigerem Druck als der Absorber betrieben werden soll oder Kompressionsvorrichtungen, wenn der Desorber bei höherem Druck als der Absorber betrieben werden muss.

Generell findet bei der Rektifikation der Stofftransport zwischen Gas und Flüssigkeit aufgrund eines Temperaturgefälles vom Sumpf zum Kopf in beiden Richtungen statt. Das schwerersiedende Fluid kondensiert aus der gasförmigen Phase und wird in der Flüssigkeit aufgenommen und das leichtsiedende Fluid verdampft aus der flüssigen Phase in die gasförmige Phase. Bei der Absorption findet der Stofftransport nur in eine Richtung statt, hier wird Gas von der Flüssigkeit absorbiert.

Der Unterschied zwischen Rektifikation und Absorption liegt nun aber darin, dass bei der Rektifikation die Gas- und die Flüssigkeitsströmung miteinander gekoppelt sind, bei der Absorption dagegen beide Ströme voneinander unabhängig eingestellt werden können: Bei der Rektifikation wird eine bestimmte Menge Flüssigkeit verdampft und steigt in Richtung Kolonnenkopf die Kolonne aufwärts. Am Kolonnenkopf wird sämtlicher Dampf kondensiert und zumindest teilweise wieder als Flüssigstrom in die Kolonne zurückgeführt. Die maximal denkbare Flüssigkeitsmenge wäre demnach die gesamte kondensierte Menge Dampf, die am Kolonnenkopf ankommt. Wird mehr Flüssigkeit im Sumpf verdampft, kann auch mehr Flüssigkeit zurückströmen. Insofern sind beide Ströme miteinander gekoppelt, und der Stofftransport hängt massgeblich von der Dampfströmung ab. Demzufolge sind Rektifikationsanwendungen in der Regel gasseitig kontrolliert.

Im Gegensatz dazu können in Absorptionsanwendungen mit Hilfe von Pumpen und Gebläsen unterschiedliche Betriebsbedingungen eingestellt werden: eine grosse Absorptionsmittelströmung kann mit einem relativ kleinen Gasstrom in Kontakt gebracht werden oder auch umgekehrt. Zudem können die Absorptionsmittel auf unterschiedliche Weise die Gaskomponenten an sich binden: physikalisch, durch chemische Reaktion oder sowohl physikalisch als auch chemisch. Dabei sind die Auswahl eines Absorptionsmittels oder Lösungsmittels für eine bestimmte Gaskomponente sowie die Konzentrationen in Gas und Flüssigkeit dafür ausschlaggebend, ob der Stofftransport eher gasseitig oder eher flüssigseitig kontrolliert ist.

Um die Anwendbarkeit der erfindungsgemässen Packung zu prüfen, wurde ein Prototyp einer Packung hergestellt, die Abstandselemente enthält: aus einer herkömmlichen Packung werden wenige Packungslagen entfernt und der frei gewordene Raum durch eingeschobene Abstandselemente gleicher Dicke zwischen den übrigen Packungslage vergleichmässigt. Jede Packungslage erhält so einen fest definierten Abstand zu den beiden benachbarten Packungslagen, wodurch sich ein Spalt zwischen allen Packungslagen mit definierter Breite ergibt. Im untersuchten Fall beträgt die Breite 1.5 mm. Zudem reduziert sich die Anzahl der Kontaktstellen im Prototypen von 79'500$m^{-3}$ auf 18'000$m^{-3}$ und die Gesamtoberfläche von 205$m^2/m^3$ auf 190$m^2/m^3$. Mit der Reduktion der Gesamtoberfläche muss eine Reduktion der Trennleistung bzw. der Effizienz der Packung einhergehen, sofern nicht andere Massnahmen diesen Verlust wieder wettmachen. Gemäss US 6'378'322 B1 sind Ausführungsformen möglich, die trotz Reduktion der Gesamtoberfläche bei der Rektifikation vorteilhafte Trennwirkung zeigen.

Der oben erwähnte Prototyp wurde zunächst in einer Rektifikationsanwendung getestet. Die Packung wurde dazu in eine Testkolonne mit 250 mm Innendurchmesser eingebaut und bei atmosphärischem Druck mit dem Testsystem Chlorbenzol/Ethylbenzol vermessen. Die Tests belegen, was vorher schon vermutet wurde: aufgrund der offeneren Querschnittsfläche, welche durch die Spalten entsteht, reduziert sich der Druckverlust über die Packung leicht im Vergleich zu einer Packung ohne Abstandselemente. Die Reduktion der Gesamtoberfläche führt dagegen zu einer Erniedrigung der Trennleistung. Die Packung mit Abstandselementen weist weniger Trennstufen pro Meter (NTSM: number of theoretical stages per meter) auf als ohne Abstandselemente. Für den Vergleich entscheidend sind die Punkte unter dem Loadingpoint, in diesem Beispiel unter dem F-Faktor 3$Pa^{0.5}$. Der F-Faktor ist ein Mass für die mittlere Gasgeschwindigkeit in der leeren Kolonne multipliziert mit der Wurzel aus der Dichte des Gases. Der F-Faktor ist proportional zu der kinetischen Energie des Gases. Unter Loadingpoint wird ein Punkt erhöhter Gas-Flüssig Interaktion verstanden.

Die entsprechenden NTSM-Werte betragen 1.6/m für die Packung mit Abstandselementen und 1.7/m für die Packung ohne Abstandselemente. Der NTSM-Wert ist eine Kenngrösse für die Trennleistung. Je höher der NTSM-Wert ist, desto grösser ist die Trennleistung der Packung. Somit wurde also die Trennleistung bezogen auf die Gesamtoberfläche nicht verbessert.

Diese bisherigen Erkenntnisse deuten also darauf hin, dass die erfindungsgemässe Packung mit reduzierten Kontaktstellen und grösseren Abständen zwischen Packungslagen zwar den Druckverlust reduziert, aber zusätzlich auch zu einer Erniedrigung der Trennleistung bei der Rektifikation führt. Demzufolge ist eine solche Packung in der Rektifikation ohne Nutzen und unterscheidet sich somit grundlegend von der in US 6'378'322 B1 vorgestellten Packung, welche offenbar vorteilhaft für die Rektifikation ist.

Überraschenderweise hat sich aus weiteren Versuchen ergeben, dass es Stoffsysteme gibt, für welche die erfindungsgemässe Packung eine Verbesserung der Trennleistung pro Gesamtoberfläche ergibt. Hauptaugenmerk liegt hierbei auf Systemen mit grosser Oberflächenspannung - zumeist wässrige Systeme - die in der Regel zu einer schlechten Benetzung der Gesamtoberfläche neigen. Vor allem in der Absorption werden verstärkt wässrige Lösungen eingesetzt, die aufgrund der hohen Oberflächenspannung des Wassers erst bei sehr grossen Volumenströmen die zur Verfügung gestellte Gesamtoberfläche vollständig als Flüssigkeitsfilm benetzen. Eine schlechte Benetzung der Gesamtoberfläche der Packung führt dagegen zwangsläufig zu einer Verminderung der Trennleistung. Eine strukturierte Packung soll in einer absorptiven Anwendung daher folgende Eigenschaften aufweisen: niedriger Druckverlust über die Packung und Bereitstellung einer möglichst grossen Gesamtoberfläche, wobei diese von der Flüssigkeit möglichst gut benetzt werden muss.

Die Hypothese, warum eine Reduktion der Kontaktstellen zu einer besseren Absorptionsleistung führt, lautet daher so: durch die schlechten Benetzungseigenschaften der verwendeten Flüssigkeiten bilden sich hinter den Kontaktstellen auf der Packungslage Zonen aus, die gar nicht von der Flüssigkeit benetzt werden. Somit kann die Gesamtoberfläche nicht in vollem Umfang von der Flüssigkeit benutzt werden. Die Flüssigkeit wird an den Kontaktstellen am Weiterfliessen gehindert, wird aufgestaut und zu den Seiten hin abgelenkt. Ähnliches kann man auch feststellen, wenn Wasser als Film auf einer ebenen Fläche herab fliesst und die Strömung plötzlich durch einen eingebrachten Gegenstand (z.B. Finger auf die Ebene gelegt) gestört wird. Hinter dem Gegenstand reisst die Filmströmung auf und es entsteht eine trockene, nicht benetzte Fläche, die erst wieder benetzt wird, wenn der Gegenstand aus der Strömung entfernt wird.

Bei dem untersuchten Stoffsystem handelt es sich um ein flüssigseitig kontrolliertes wässriges System. Mit Natronlauge wird $CO_2$, das sich in der Umgebungsluft befindet, absorbiert und chemisch gebunden. Die chemische Reaktion in der Flüssigkeit läuft dabei so schnell ab, dass sich die Absorption im Prinzip auf die Grenzfläche zwischen der Gas- und der Flüssigphase beschränkt. Das bedeutet, hier kommt es im massgeblichen Sinn auf den Anteil der Stoffaustauschfläche an der Gesamtoberfläche an. Alle anderen Mechanismen spielen nur eine untergeordnete Rolle.

Mit geeigneten Korrelationen (vgl. Duss et al.: "Effective Interfacial Area and Liquid Hold-up of Nutter Rings at High Liquid Loads", Chemical Engineering & Technology 24 (7), 2001 pp. 716-723) kann aus den erhaltenen Messergebnissen direkt die effektiv zur Verfügung stehende Stoffaustauschfläche bestimmt werden. Wie Fig. 11 zeigt, führt die Packung mit Abstandselementen und einer reduzierten Anzahl an Kontaktstellen trotz kleinerer Gesamtoberfläche zu einer grösseren Stoffaustauschfläche als die Packung ohne Abstandselemente und mit vielen Kontaktstellen. Das bedeutet, die Trennleistung in flüssigseitig kontrollierten Stoffsystemen kann tatsächlich durch eine Reduktion der Kontaktstellen und eine geeignete Anordnung der Kontaktstellen verbessert werden. Ebenso lässt sich der Druckverlust durch die Verwendung von Abstandselementen vermindern sowie der Materialeinsatz reduzieren, weil eine geringere Anzahl an Packungslagen nötig ist. Die untere Kurve der Fig. 11 zeigt die Stoffaustauschfläche für eine marktübliche strukturierte Packung vom Typ Mellapak™ bei zunehmender Belastung des Stoffaustauschapparats mit schwerer flüchtigem Fluid, wobei die Belastung L in $m^3/m^2$ h auf der x-Achse aufgetragen ist. Die obere Kurve der Fig. 11 zeigt im Vergleich dazu die Stoffaustauschfläche relativ zur Gesamtoberfläche für eine strukturierte Packung gemäss der Erfindung. Für alle betrachteten Messpunkte ergibt sich, dass das obige Verhältnis unter Verwendung einer Packung mit Abstandselementen grösser ist als für eine Packung ohne Abstandselemente.

Derartige Systeme finden sich vorwiegend in der absorptiven Aufbereitung von Abgasen, in denen mit Hilfe reaktiver, wässriger Lösungen problematische Komponenten dem Abgasstrom entzogen werden sollen. Als Beispiel gilt hier die Absorption von klimaschädlichem $CO_2$ aus Kraftwerksabgasen mit Hilfe wässriger Absorptionsmittel, welche organische oder anorganische basische Stoffe wie z.B. MEA oder Pottasche enthalten können.

In solchen Stoffsystemen zeigt die Packung mit einer reduzierten Anzahl an Kontaktstellen eine signifikante Reduktion des Druckabfalls sowie überraschenderweise eine Erhöhung der Trennleistung gegenüber vergleichbaren Packungen mit vielen Kontaktstellen und ohne Spalten zwischen den Packungslagen.

Somit ist die Packung bestens geeignet, um insbesondere in der Absorption von $CO_2$ aus Kraftwerksabgasen mit basischen, wässrigen Lösungen eingesetzt zu werden.

**Patentansprüche**

1. Strukturierte Packung (1) umfassend mindestens eine erste Packungslage (10), welche ein erstes wellenartiges Profil aufweist,

   wobei das erste wellenartige Profil als eine Mehrzahl offener Kanäle (12, 14, 16) ausgebildet ist, wobei die Kanäle ein erstes Wellental (22), einen ersten Wellenberg (32) und einen zweiten Wellenberg (42) umfassen, wobei der erste Wellenberg (32) und der zweite Wellenberg (42) das erste Wellental (22) begrenzen und wobei der erste und der zweite Wellenberg einen ersten Scheitel (33) und einen zweiten Scheitel (43) aufweisen,
   wobei auf dem ersten Scheitel (33) des ersten Wellenbergs (32) ein sich in Richtung des ersten Scheitels (33) erstreckendes Abstandselement (34) ausgebildet ist,
   wobei das erste Wellental (22) einen Talgrund (23) aufweist, wobei das Abstandselement (34) eine Kante (35) aufweist, die einen grösseren Normalabstand vom Talgrund (23) des Wellentals (22) hat als der erste Scheitel (33) des ersten Wellenbergs (32),
wobei die strukturierte Packung (1) eine zweite Packungslage (100) umfasst, die ein zweites wellenartiges Profil aufweist,
wobei das erste wellenartige Profil der ersten Packungslage (10) kreuzweise zum zweiten wellenartigen Profil der zweiten Packungslage (100) angeordnet ist,
wobei zumindest ein Teil der Scheitel (33, 43) als Kante ausgebildet ist,
wobei Abstandselemente (24, 34, 44) auf jeder der ersten und zweiten Packungslage (10, 100) angeordnet sind und
wobei die zweite Packungslage (100) ein wellenartiges Profil wie die erste Packungslage (10) aufweist, wobei die Abstandselemente (24, 34, 44) der ersten Packungslage (10) mit den Abstandselementen der zweiten Packungslage (100) in berührendem Kontakt sind.

**2.** Strukturierte Packung (1) nach Anspruch 1, wobei auf dem zweiten Scheitel (43) ein zweites Abstandselement (44) angeordnet ist.

**3.** Strukturierte Packung (1) nach einem der vorhergehenden Ansprüche, wobei auf dem ersten Talgrund (23) ein drittes Abstandselement (24) angeordnet ist.

**4.** Strukturierte Packung (1) nach einem der vorhergehenden Ansprüche, umfassend eine erste Randbegrenzung (50, 51), sowie eine zweite Randbegrenzung (60,61), wobei die erste Randbegrenzung (50,51) im Wesentlichen parallel zur zweiten Randbegrenzung (60,61) angeordnet ist.

**5.** Strukturierte Packung (1) nach einem der vorhergehenden Ansprüche, wobei die Wellenhöhe (28) im Wesentlichen konstant ist.

**6.** Strukturierte Packung (1) nach einem der vorhergehenden Ansprüche, wobei zumindest ein Teil der Wellentäler v-förmig ausgebildet ist.

**7.** Strukturierte Packung (1) nach einem der vorhergehenden Ansprüche, wobei die Abstandselemente bei vertikaler Ausrichtung der ersten und zweiten Packungslagen (10, 100) untereinander angeordnet sind.

**8.** Strukturierte Packung (1) nach einem der vorhergehenden Ansprüche, wobei die Abstandselemente bei vertikaler Ausrichtung ersten und zweiten Packungslagen (10, 100) nebeneinander liegen.

**9.** Stoffaustauschapparat, insbesondere Kolonne, umfassend eine strukturierte Packung (1) nach einem der vorhergehenden Ansprüche.

**10.** Verwendung einer strukturierten Packung (1) nach einem der vorhergehenden Ansprüche für die Absorption mit einem wässrigen Absorptionsmittel.

## Claims

**1.** Structured packing (1) comprising at least one first packing layer (10), comprising a first wavy profile, said first wavy profile being designed as a plurality of open channels (12, 14, 16), said channels comprising a fist wave trough (22), a first wave crest (32) and a second wave crest (42), the first wave crest (32) and the second wave crest (42) confining the first wave trough (22) and said first wave crest and said second wave crest comprising a first apex (33) and a second apex (43),
a spacer (34) being arranged on the first apex (33) of the first wave crest (32), said spacer (34) extending in the direction of the first apex (33) said first wave trough (22) exhibiting a trough base (23), said spacer (34) exhibiting an edge (35) which has a larger normal distance from the trough base (23) of the wave trough (22) than the first apex (33) of the first wave crest (32),
the structured packing (1) comprising a second packing layer (100), having a second wavy profile,
the first wavy profile of the first packing layer (10) being oriented crosswise with respect to the second wavy profile of the second packing layer (100),
with at least part of the apices (33, 43) being designed as an edge,
spacers (24, 34, 44) being arranged on each of the first and second packing layers (10, 100) and
the second packing layer (100) exhibiting a wavy profile like the first packing layer (10), with the spacers (24, 34, 44) of the first packing layer (10) being in touching contact with the spacers of the second packing layer (100).

**2.** Structured packing (1) according to claim 1, **wherein** a second spacer (44) is arranged on the second apex (43).

**3.** Structured packing (1) according to anyone of the preceding claims, **wherein** a third spacer (24) is arranged on the first trough base (23).

**4.** Structured packing (1) according to anyone of the preceding claims comprising a first border limit (50, 51) as well as a second border limit (60, 61), the first border limit (50, 51) being oriented essentially in parallel to the second border limit (60, 61).

**5.** Structured packing (1) according to anyone of the preceding claims, **wherein** the wave height (28) is essentially constant.

**6.** Structured packing (1) according to anyone of the preceding claims, **wherein** at least part of the wave troughs is arranged in V-shape.

**7.** Structured packing (1) according to anyone of the preceding claims, **wherein** the spacers are arranged one below the other, when the first packing layer (10) and the second packing layer (100) are oriented vertically.

**8.** Structured packing (1) according to anyone of the preceding claims, **wherein** the spacers are arranged side by side, when the first packing layer (10) and the second packing layer (100) are oriented vertically.

**9.** Mass transfer apparatus, in particular a column, comprising a structured packing (1) according to anyone of the preceding claims.

**10.** Use of a structured packing (1) according to anyone of the preceding claims for the absorption with an aqueous absorption means.

## Revendications

**1.** Garnissage structuré (1) comprenant au moins une première couche de garnissage (10) montrant un premier profil onduleux,
ce premier profil onduleux étant réalisé en pluralité de canaux ouverts (12 ,14, 16), ces canaux comprenant un premier creux d'onde (22), un premier sommet d'onde (32) et un deuxième sommet d'onde (42),
dont le premier sommet d'onde (32) et le deuxième sommet d'onde (42) limitent le premier creux d'onde (22) et le premier et le deuxième sommet d'onde étant muni d'un premier vertex (33) et d'un deuxième vertex (43)
dont un élément d'espacement (34) est formé sur le premier vertex (33) du premier sommet d'onde (32), ledit élément d'espacement (34) s'étendant en direction du premier vertex (33),
dont le premier creux d'onde (22) comprend un fond de creux (23), dont l'élément d'espacement (34) comprend un bord (35), ce bord (35) montrant une distance normale plus grande du fond de creux (23) du creux d'onde (22) que le premier vertex (33) du premier sommet d'onde (32),
dont le garnissage structuré (1) comprend une deuxième couche de garnissage (100), montrant un deuxième profil onduleux,
dont le premier profil onduleux de la première couche de garnissage (10) est disposé de manière croisée par rapport au deuxième profil onduleux de la deuxième couche de garnissage (100),
dont au moins une partie des vertices (33, 43) est réalisée en rebord,
dont des éléments d'espacement (24, 34, 44) sont disposés sur chacune de la première couche de garnissage (10) et de la deuxième couche de garnissage (100),
dont la deuxième couche de garnissage (100) comprend un profil onduleux comme la première couche de garnissage (10), dont les éléments d'espacement (24, 34, 44) de la première couche de garnissage (10) sont en contact touchant avec les éléments d'espacements de la deuxième couche de garnissage (100).

**2.** Garnissage structuré (1) selon la revendication 1, dont un deuxième élément d'espacement (44) est disposé sur le deuxième vertex (43).

**3.** Garnissage structuré (1) selon l'une des revendications précédentes, dont un troisième élément d'espacement (24) est disposé sur le premier fond de creux (23).

**4.** Garnissage structuré (1) selon l'une des revendications précédentes comprenant une première délimitation de bord (50, 51) et une deuxième délimitation de bord (60, 61), dont la première délimitation de bord (50, 51) est orientée d'une manière essentiellement parallèle par rapport à la deuxième délimitation de bord (60, 61).

**5.** Garnissage structuré (1) selon l'une des revendications précédentes dont la hauteur d'onde (28) est essentiellement constante.

**6.** Garnissage structuré (1) selon l'une des revendications précédentes dont au moins une partie des creux d'ondes est réalisée en forme de V.

**7.** Garnissage structuré (1) selon l'une des revendications précédentes dont les éléments d'espacement sont disposés les uns au-dessous des autres quand la première couche de garnissage (10) et la deuxième couche de garnissage (100) ont une orientation verticale.

**8.** Garnissage structuré (1) selon l'une des revendications précédentes dont les éléments d'espacement sont disposés les uns à côté des autres quand la première couche de garnissage (10) et la deuxième couche de garnissage (100) ont une orientation verticale.

**9.** Dispositif d'échange de matière, notamment colonne, comprenant un garnissage structuré (1) selon l'une des revendications précédentes.

**10.** Utilisation d'un garnissage structuré (1) selon l'une des revendications précédentes pour l'absorption avec un agent d'absorption.

Fig.1

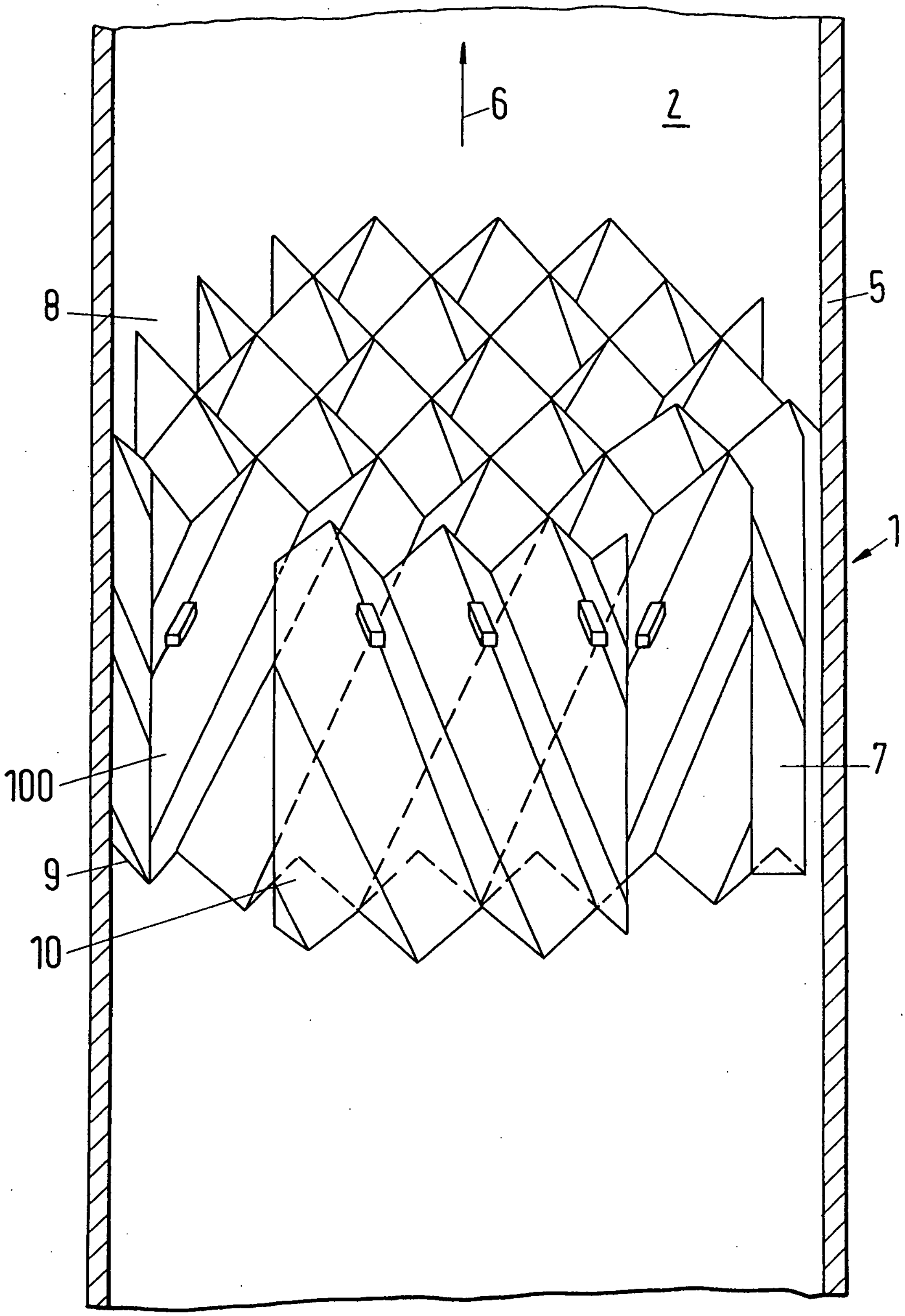

Fig.2a

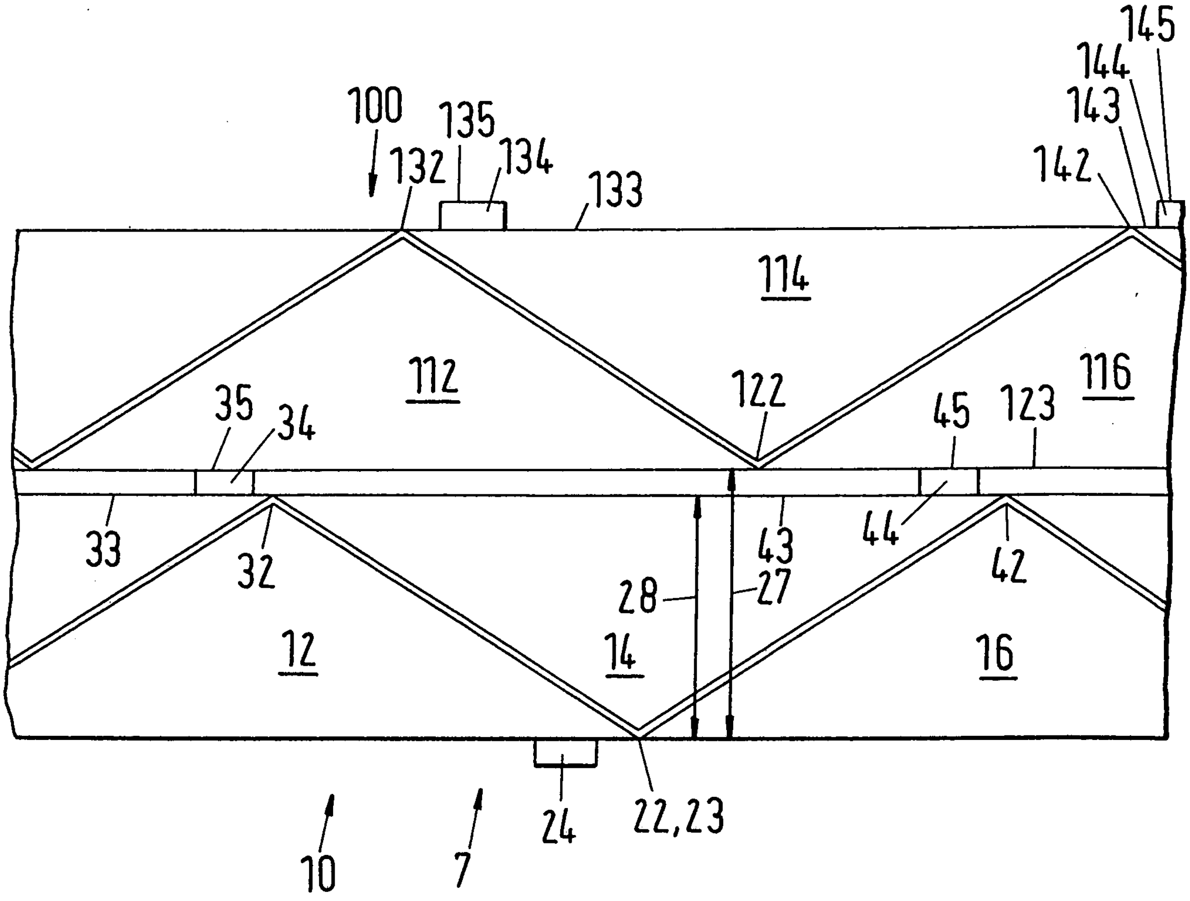
100
135
132
134
133
145
144
143
142
114
112
116
122
35
34
45
123
33
32
43
44
42
28
27
12
14
16
24
22,23
10
7

Fig.2b

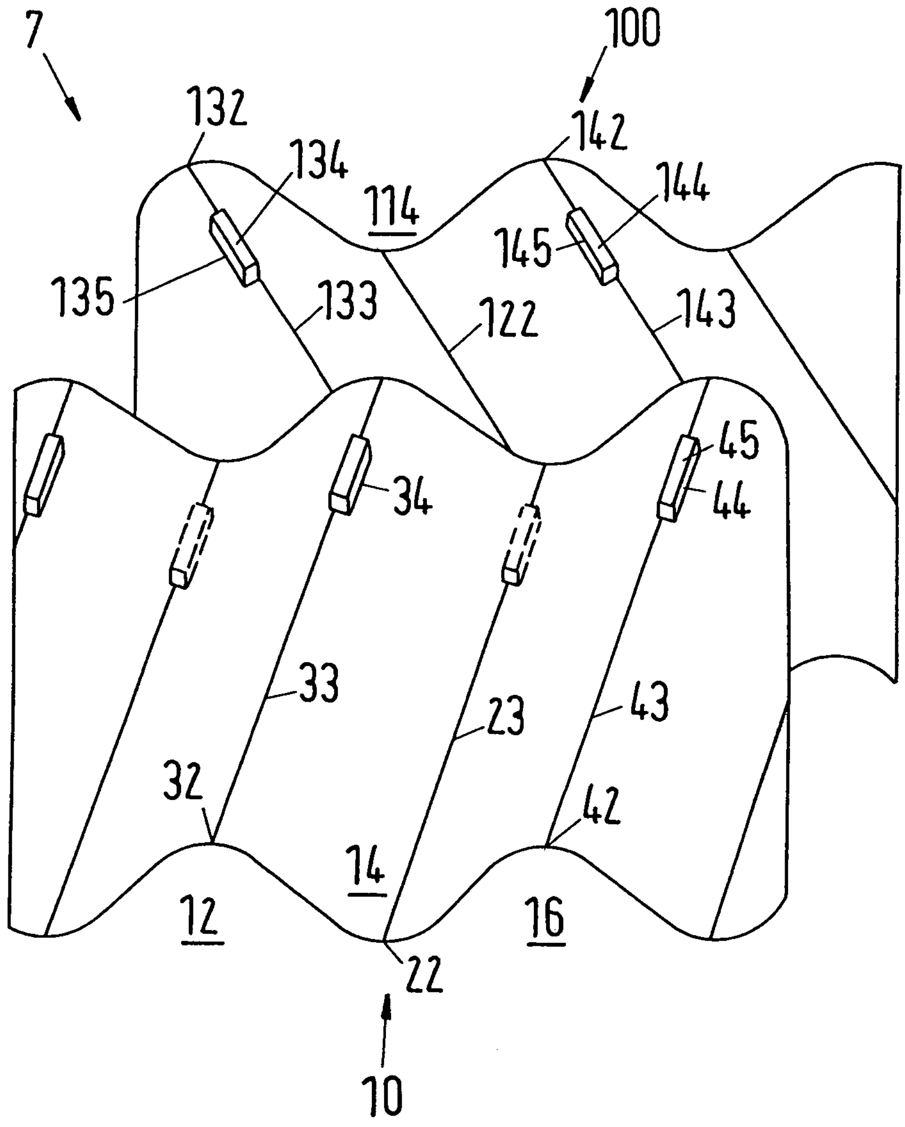
7
100
132
134
114
142
144
145
135
133
122
143
45
34
44
33
23
43
32
42
14
12
16
22
10

Fig.3

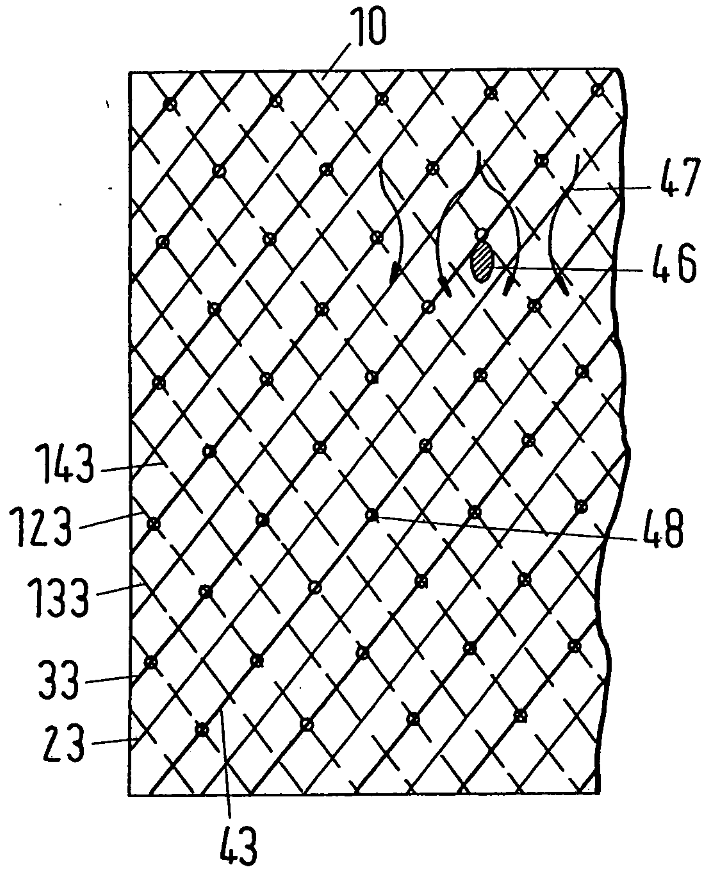

Fig.4

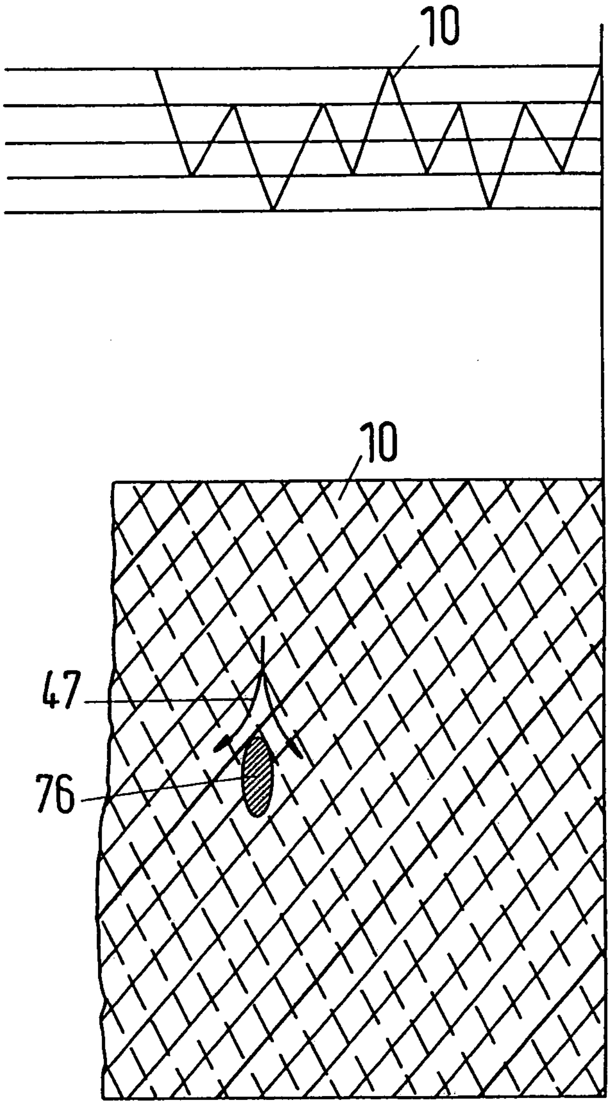

Fig.5

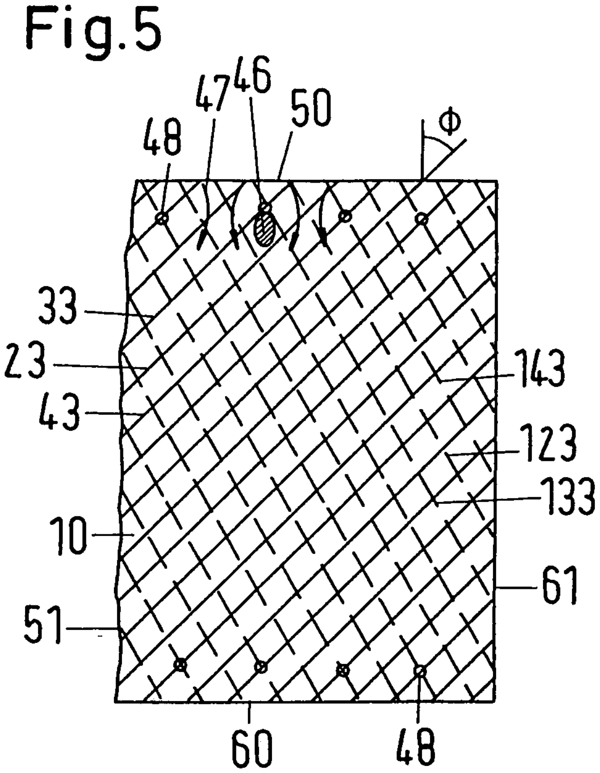
47
46
50
48
Φ
33
23
43
10
51
143
123
133
61
60
48

Fig.6

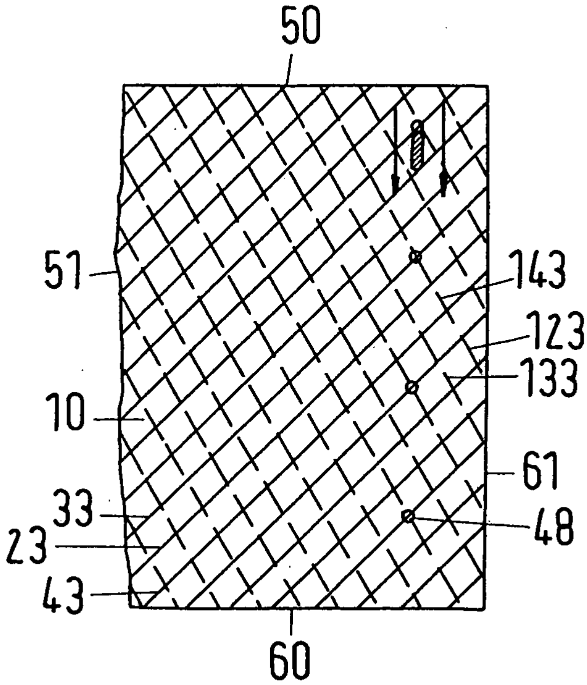
50
51
10
33
23
43
143
123
133
61
48
60

Fig.7

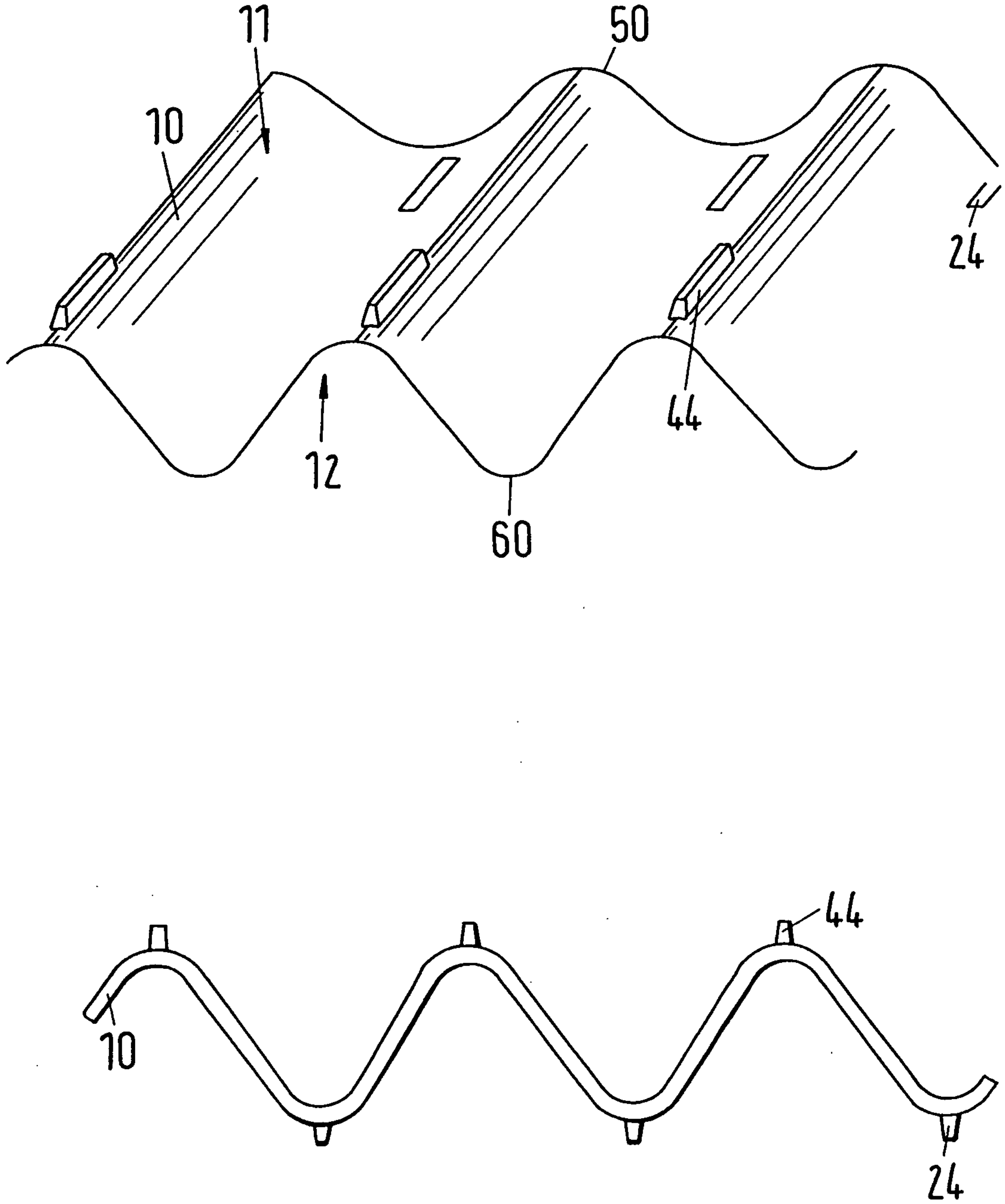

Fig.8a

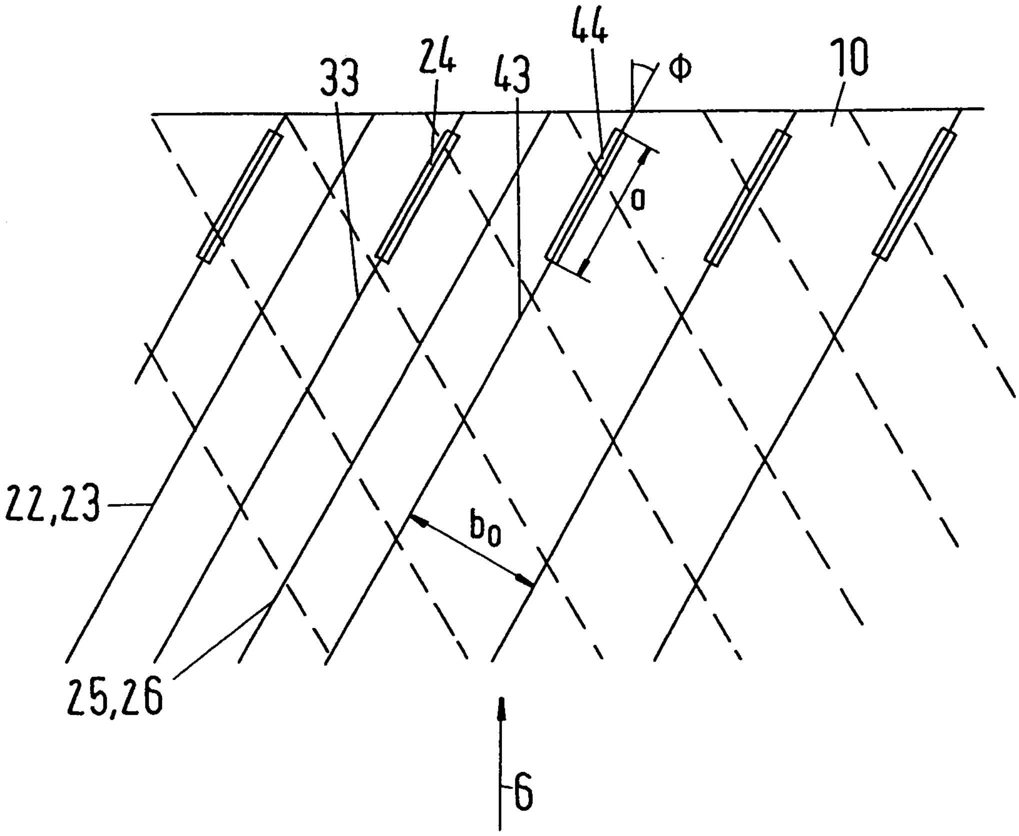


Fig.8b

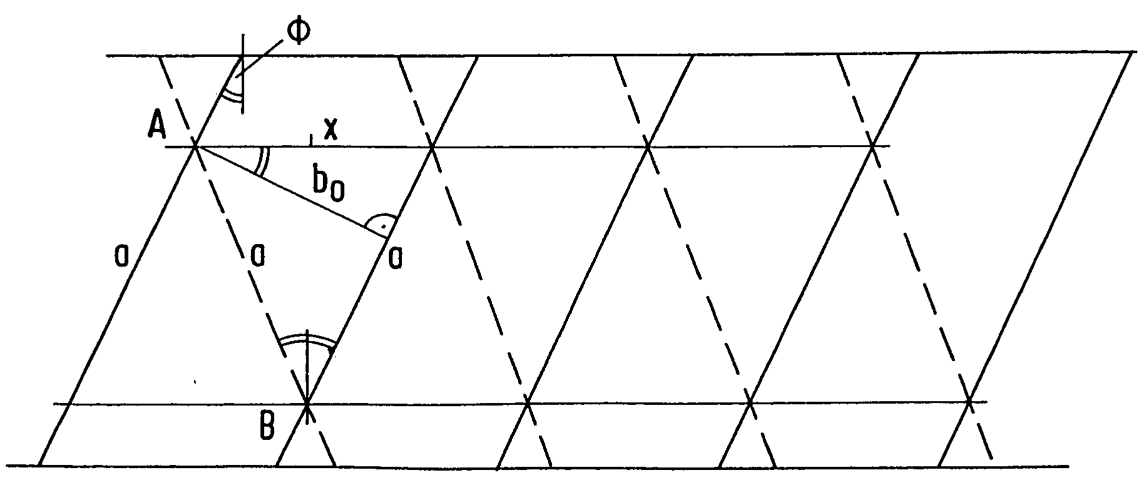

Fig.9a

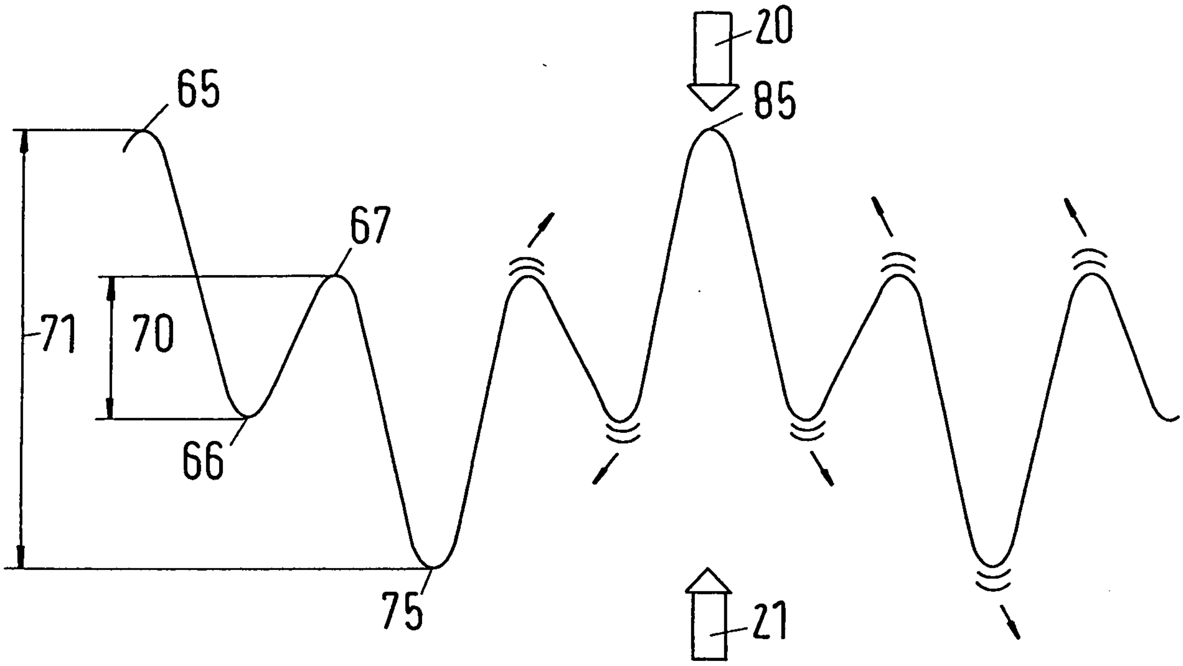


Fig.9b

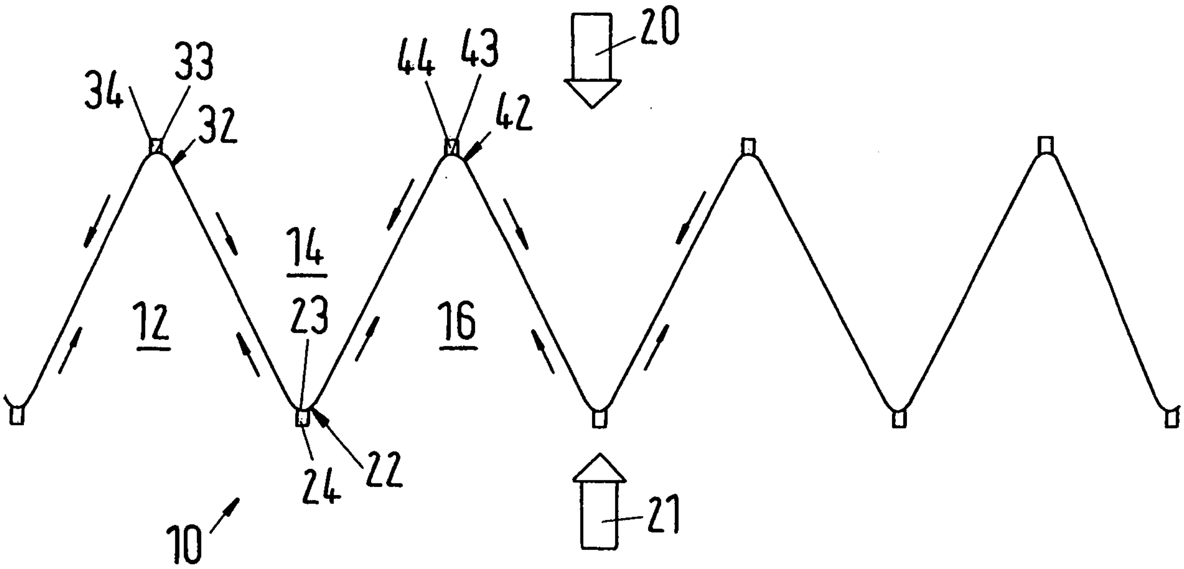

Fig.10

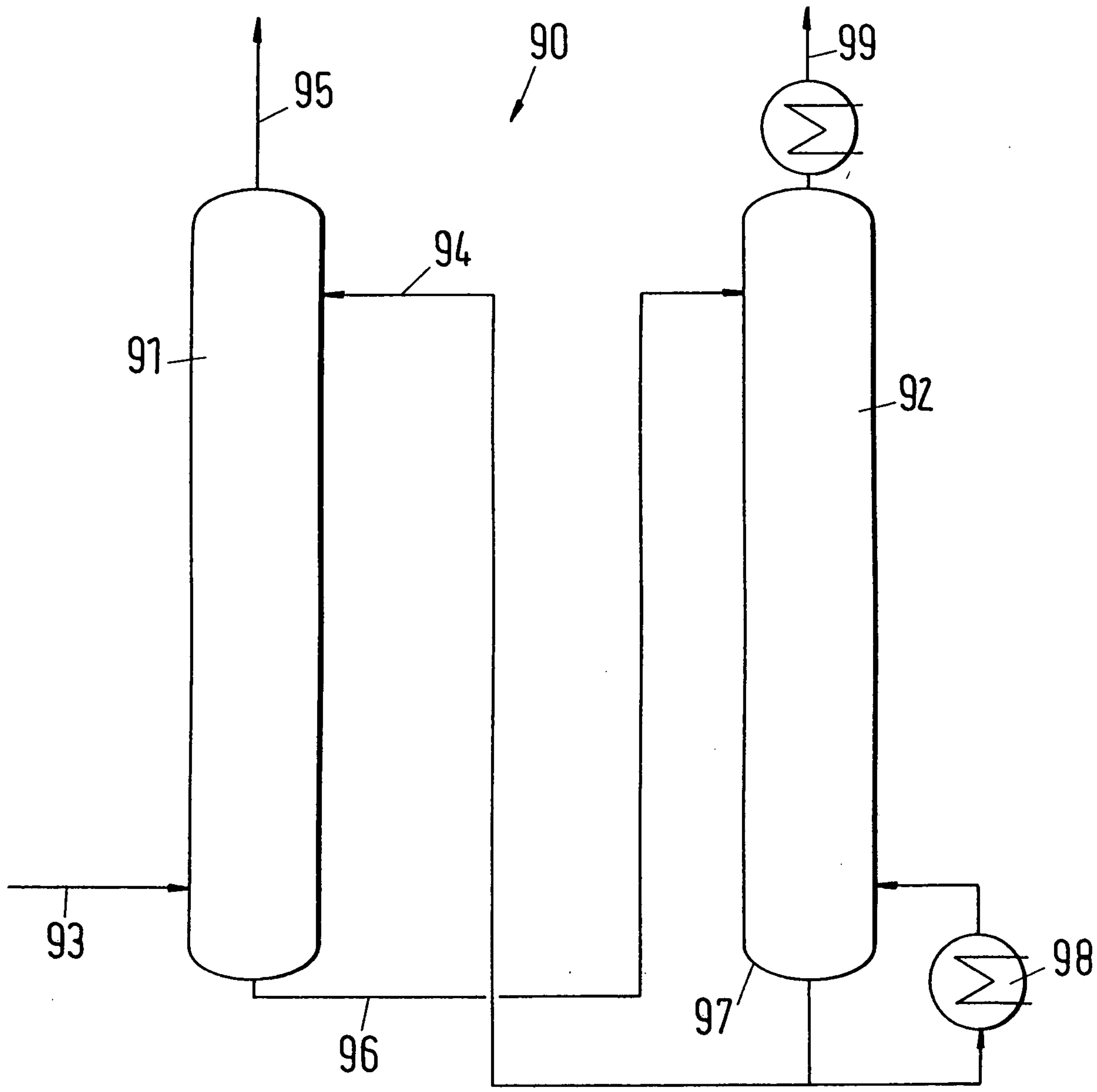

Fig.11

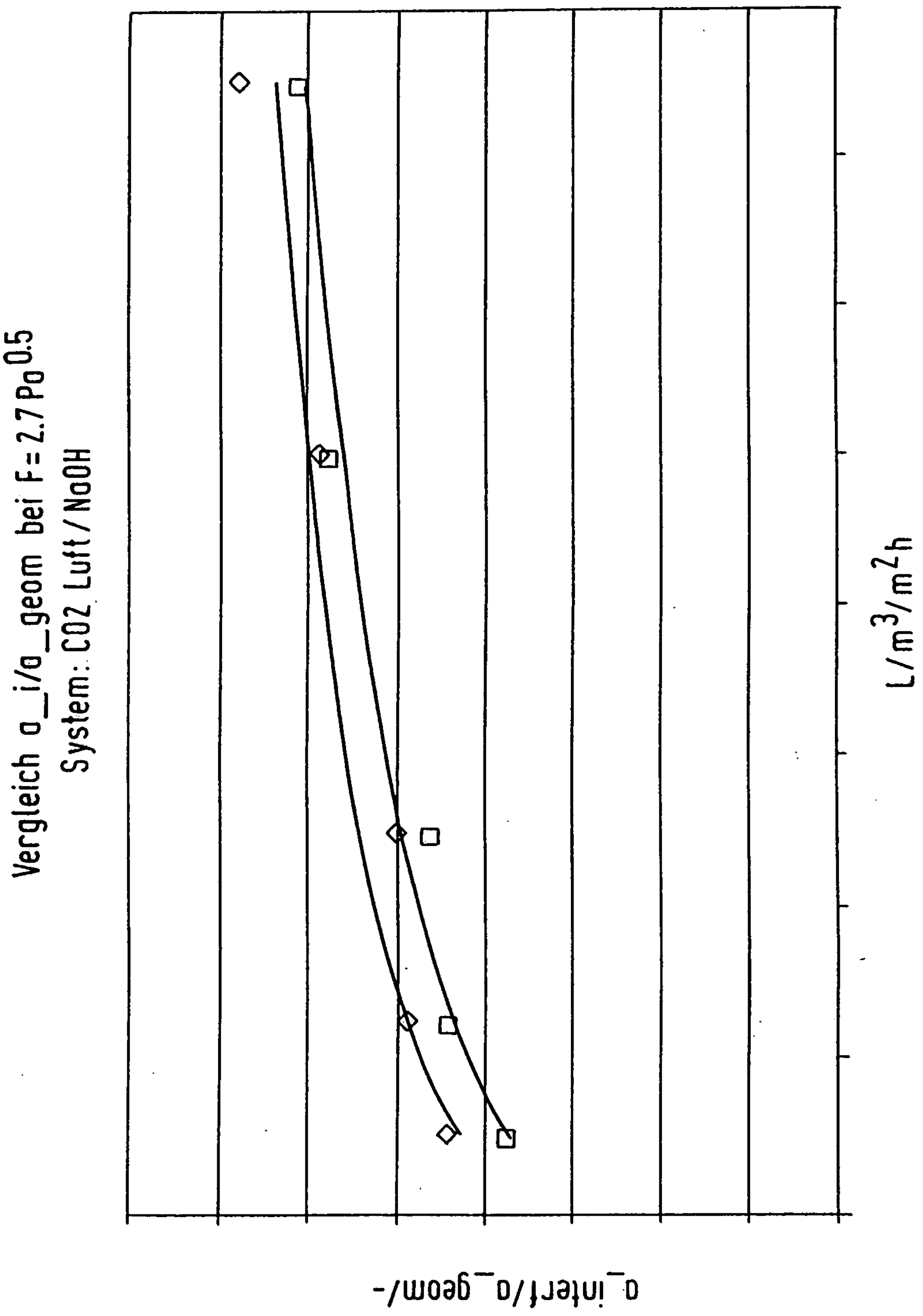
Vergleich a__i/a__geom bei F= 2.7 Pa0.5
System: CO2 Luft/NaOH
L/m3/m2h
a_interf/a_geom/-

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6378332 B1
- EP 0671963 B1
- EP 1063009 A1
- EP 1216752 A2
- EP 1166868 A2
- US 20080093294 A1
- GB 2258524 A
- US 6378332 B


### In der Beschreibung aufgeführte Nicht-Patentliteratur


- **K. SATTLER.** Thermische Trennverfahren. VCH Verlag, 1995
- **DUSS et al.** Effective Interfacial Area and Liquid Hold-up of Nutter Rings at High Liquid Loads. *Chemical Engineering & Technology,* 2001, vol. 24 (7), 716-723